(19) Europäisches Patentamt / European Patent Office / Office européen des brevets

(11) **EP 4 648 404 A1**

(12) **EUROPEAN PATENT APPLICATION**
published in accordance with Art. 153(4) EPC

(43) Date of publication:
**12.11.2025 Bulletin 2025/46**

(21) Application number: **24759716.4**

(22) Date of filing: **21.02.2024**

(51) International Patent Classification (IPC):
**H04N 9/64** (2023.01)

(52) Cooperative Patent Classification (CPC):
**H04N 9/64; H04N 21/234; H04N 21/2343; H04N 21/258**

(86) International application number:
**PCT/CN2024/077956**

(87) International publication number:
**WO 2024/175039 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.02.2023 CN 202310196622**

(71) Applicant: **Huawei Technologies Co., Ltd.**
**Shenzhen, Guangdong 518129 (CN)**

(72) Inventors:
- XU, Weiwei
  Shenzhen, Guangdong 518129 (CN)
- YU, Quanhe
  Shenzhen, Guangdong 518129 (CN)
- ZHANG, Jiwu
  Shenzhen, Guangdong 518129 (CN)

(74) Representative: **Eisenführ Speiser**
**Patentanwälte Rechtsanwälte PartGmbB**
**Johannes-Brahms-Platz 1**
**20355 Hamburg (DE)**

(54) **TONE MAPPING METHOD AND APPARATUS**

(57) This application provides a tone mapping method and apparatus. In the method, tone mapping is performed on a to-be-displayed image based on reference information and terminal device information of a corresponding type. The reference information includes at least one of a reference display device size, a reference viewing distance, a reference viewing angle, reference ambient light luminance, or reference display device resolution. The terminal device information includes at least one of a terminal display device size, a user viewing distance, a user viewing angle, ambient light luminance, or terminal display device resolution. In embodiments of this application, when tone mapping is performed on the image, other information such as the terminal display device size and the user viewing distance is also considered, to flexibly adapt to different environments and display devices, thereby effectively improving display adaptation effect.

```
┌─────────────────────────────────────────────────┐
│         Obtain a to-be-displayed image          │──── S501
└─────────────────────────────────────────────────┘
                        │
                        ▼
┌─────────────────────────────────────────────────┐
│ Obtain reference information, where the reference│
│ information includes at least one of a reference │
│ display device size, a reference viewing distance,│──── S502
│ a reference viewing angle, reference ambient     │
│ light luminance, or reference display device     │
│ resolution                                       │
└─────────────────────────────────────────────────┘
                        │
                        ▼
┌─────────────────────────────────────────────────┐
│ Obtain terminal device information, where the    │
│ terminal device information includes at least one│
│ of a terminal display device size, a user viewing│──── S503
│ distance, a user viewing angle, ambient light    │
│ luminance, or terminal display device resolution │
└─────────────────────────────────────────────────┘
                        │
                        ▼
┌─────────────────────────────────────────────────┐
│ Perform tone mapping on the to-be-displayed image│
│ based on the reference information and the        │──── S504
│ corresponding terminal device information         │
└─────────────────────────────────────────────────┘
```

FIG. 5

## Description

### TECHNICAL FIELD

This application relates to the field of display technologies, and in particular, to a tone mapping method and apparatus.

### BACKGROUND

Dynamic range (dynamic range) indicates a ratio of a maximum value to a minimum value of a variable in many fields. In a digital image, its dynamic range indicates a ratio of a maximum luminance value to a minimum luminance value in a displayable range of the image. For a same scene in the real world, its dynamic range is usually from $10^{-3}$ candelas/square meter ($cd/m^2$) to $10^6$ $cd/m^2$. A high dynamic range (high dynamic range, HDR) video technology expands a displayable luminance range of an image, so that information in a larger luminance range in the real world can be recorded, and more details of bright and dark parts in the image can be displayed. However, luminance of a video or an image usually does not match a displayable luminance range of a standard dynamic range (standard dynamic range, SDR) display device or a large quantity of other existing HDR display devices.

Therefore, when the video or the image is displayed on an existing display device, the luminance of the video or the image needs to be processed based on a display capability of the display device, so that the luminance of the video or the image is adapted to a displayable luminance range of the display device. This process is referred to as tone mapping (tone mapping, TM).

However, in an existing solution, only a display luminance range of the display screen is considered during tone mapping, and optimal display adaptation effect cannot be achieved.

### SUMMARY

This application provides a tone mapping method and apparatus. When tone mapping is performed on an image, other information such as a terminal display device size and a user viewing distance is also considered, thereby improving display adaptation effect.

According to a first aspect, an embodiment of this application provides a tone mapping method. The method includes: obtaining a to-be-displayed image; obtaining reference information, where the reference information includes at least one of a reference display device size, a reference viewing distance, a reference viewing angle, reference ambient light luminance, or reference display device resolution; obtaining terminal device information, where the terminal device information includes at least one of a terminal display device size, a user viewing distance, a user viewing angle, ambient light luminance, or terminal display device resolution; and performing tone mapping on the to-be-displayed image based on the reference information and the terminal device information of a corresponding type.

In this embodiment of this application, in performing tone mapping on the to-be-displayed image based on the reference information and the terminal device information of the corresponding type, the reference display device size corresponds to the terminal display device size, the reference viewing distance corresponds to the user viewing distance, the reference viewing angle corresponds to the user viewing angle, the reference ambient light luminance corresponds to the ambient light luminance, and the reference display device resolution corresponds to the terminal display device resolution.

In this embodiment of this application, when tone mapping is performed on the image, other information such as the terminal display device size and the user viewing distance is also considered, thereby improving display adaptation effect.

In a possible implementation, performing tone mapping on the to-be-displayed image based on the reference information and the terminal device information of the corresponding type includes: obtaining a tone mapping parameter based on the reference information and the terminal device information of the corresponding type; and performing tone mapping on the to-be-displayed image based on the tone mapping parameter.

In a possible implementation, obtaining the tone mapping parameter based on the reference information and the terminal device information of the corresponding type includes: adjusting an initial tone mapping parameter of the to-be-displayed image based on the reference information and the terminal device information of the corresponding type, to obtain the tone mapping parameter.

In this implementation of this application, the initial tone mapping parameter of the to-be-displayed image is adjusted based on the reference information and the terminal device information of the corresponding type, to obtain the tone mapping parameter. In this way, the tone mapping parameter varies with the terminal display device size, the user viewing distance, the user viewing angle, the ambient light luminance, or the terminal display device resolution, to flexibly adapt to different environments and display devices, thereby effectively improving the display adaptation effect, and improving tone mapping effect and display effect of the image. In addition, visual perception of a user is more consistent in different application scenarios, thereby improving viewing experience of the user.

In a possible implementation, adjusting the initial tone mapping parameter of the to-be-displayed image based on the reference information and the terminal device information of the corresponding type, to obtain the tone mapping parameter includes: when a relationship between the reference information and the terminal device information meets a first condition, adjusting the initial tone mapping parameter of the to-be-displayed image in a first manner, to obtain the tone mapping parameter; and when a relationship between the reference information and the terminal device information meets a second condition, adjusting the initial tone mapping parameter of the to-be-displayed image in a second manner, to obtain the tone mapping parameter. The initial tone mapping parameter represents an initial tone mapping curve, and the tone mapping parameter represents an adjusted tone mapping curve.

In this implementation, a manner of adjusting the initial tone mapping parameter corresponds to the relationship between the reference information and the terminal device information, so that different adjustment manners is used for different application scenarios, to obtain different adjusted tone mapping parameters, thereby meeting user requirements of different application scenarios, adapting to a changing application scenario, and improving user experience.

In a possible implementation, the first condition includes: at least one of the following: the terminal display screen size is smaller than the reference display device size, the user viewing distance is greater than the reference viewing distance, the user viewing angle deviates from the reference viewing angle, the ambient light luminance is greater than the reference ambient light luminance, or the terminal display device resolution is less than the reference display device resolution.

In this implementation, when the terminal display screen size is smaller than the reference display device size, an image visually perceived by the user becomes dark or has insufficient contrast. Similarly, when the user viewing distance is greater than the reference viewing distance, the user viewing angle deviates from the reference viewing angle, the ambient light luminance is greater than the reference ambient light luminance, or the terminal display device resolution is less than the reference display device resolution, an image visually perceived by the user also becomes dark or blurry, affecting the viewing experience of the user. Therefore, adjusting the tone mapping parameter in the first manner helps improve overall luminance and detail definition of the image, and can improve the tone mapping effect of the image in different application scenarios, thereby meeting user requirements of different application scenarios, and improving user visual experience.

In a possible implementation, adjusting the initial tone mapping parameter of the to-be-displayed image in the first manner includes: obtaining one or more first luminance feature values of the to-be-displayed image; and adjusting the initial tone mapping parameter, so that an obtained mapped value that is of the adjusted tone mapping curve and that is at the one or more first luminance feature values is greater than a mapped value that is of the initial tone mapping curve and that is at the one or more first luminance feature values.

In this implementation, the mapped value that is of the adjusted tone mapping curve and that is at the one or more first luminance feature values is increased, so that all or a part of mapped values of the adjusted tone mapping curve is increased, and all or a part of luminance of an image obtained through tone mapping on the image based on the tone mapping parameter is improved, to adapt to an application scenario covered by the first condition, improve the display adaptation effect, and enhance overall luminance perception of the user on the image. In this way, the luminance perception of the user is consistent in different application scenarios, and user experience is improved. For example, when the terminal display screen size is smaller than the reference display device size, the mapped values of the tone mapping curve are increased to improve the luminance of the image. In this way, viewing luminance perception of the user on a small-sized display screen is the same as that on a large-sized display screen, and user visual comfort is improved.

In a possible implementation, adjusting the initial tone mapping parameter of the to-be-displayed image in the first manner further includes: obtaining one or more second luminance feature values of the to-be-displayed image; and adjusting the initial tone mapping parameter, so that an obtained slope that is of the adjusted tone mapping curve and that is at the one or more second luminance feature values is greater than a slope that is of the initial tone mapping curve and that is at the one or more second luminance feature values.

In this implementation, the slope that is of the adjusted tone mapping curve and that is at the one or more second luminance feature values is increased, so that all or a part of slopes of the adjusted tone mapping curve is increased, and all or a part of contrast and luminance of an image obtained through tone mapping on the image based on the adjusted tone mapping curve is improved, to adapt to an application scenario covered by the first condition. In this way, perception of contrast and picture details of the user is consistent in different application scenarios, and user experience and the display adaptation effect are improved. For example, when the terminal display screen size is smaller than the reference display device size, the slope of the tone mapping curve is increased to improve the contrast and luminance of the image. In this way, perception on image definition and luminance of the user on the small-sized display screen is the same as that on the large-sized display screen, and the user visual comfort is improved.

In a possible implementation, adjusting the initial tone mapping parameter of the to-be-displayed image in the first manner further includes: obtaining a base layer and one or more enhancement layers of the to-be-displayed image, where a value obtained through mapping on a first feature value of any enhancement layer in the one or more enhancement layers based on the initial tone mapping curve of the any enhancement layer is a second feature value; and adjusting the initial tone mapping parameter of the any enhancement layer, so that an absolute value of a value obtained through mapping on the first feature value based on the adjusted tone mapping curve is greater than an absolute value of the second feature value.

In this implementation, the first feature value and the second feature value may be positive values or negative values. When the value obtained through mapping on the first feature value based on the adjusted tone mapping curve is compared with the second feature value, the absolute values of the two values are compared.

In this implementation, after the base layer is mixed with one or more adjusted enhancement layers, the absolute value of the mapped value corresponding to the one or more enhancement layers in the image is increased, so that a feature of the enhancement layers is enhanced, more high-frequency components are reserved, and local contrast or luminance is improved. The enhancement layers include an edge layer and a texture layer. Therefore, corresponding image feature enhancement includes edge sharpness enhancement and higher texture detail definition, to adapt to an application scenario covered by the foregoing first condition, and improve display adaptation effect, so that a complex image has better tone mapping effect and display effect. For example, when the terminal display screen size is smaller than the reference display device size, the mapped value of the tone mapping curve of the enhancement layer is increased to improve the local contrast, detail definition, or luminance of the image. In this way, the definition and detail information of the image viewed by the user on the small-sized display screen is the same as that on the large-sized display screen, and the user visual comfort is improved.

In a possible implementation, the second condition includes: at least one of the following: the terminal display screen size is larger than the reference display device size, the user viewing distance is less than the reference viewing distance, the ambient light luminance is less than the reference ambient light luminance, or the terminal display device resolution is greater than the reference display device resolution.

In this implementation, when the terminal display screen size is larger than the reference display device size, an image visually perceived by the user becomes bright or dazzling, or has excessively high contrast, causing visual discomfort. Similarly, when the user viewing distance is less than the reference viewing distance, the ambient light luminance is less than the reference ambient light luminance, or the terminal display device resolution is greater than the reference display device resolution, an image visually perceived by the user also becomes bright or even dazzling, resulting in harm to eyes, or has excessively high contrast, causing the visual discomfort and affecting the viewing experience of the user. Therefore, adjusting the tone mapping curve in the second manner to lower overall luminance and contrast of the image can improve tone mapping effect and display effect of the image in different application scenarios, thereby meeting user requirements of different application scenarios, and improving user visual experience.

In a possible implementation, adjusting the initial tone mapping parameter of the to-be-displayed image in the second manner includes: obtaining one or more third luminance feature values of the to-be-displayed image; and adjusting the initial tone mapping parameter, so that an obtained mapped value that is of the adjusted tone mapping curve and that is at the one or more third luminance feature values is less than a mapped value that is of the initial tone mapping curve and that is at the one or more third luminance feature values.

In this implementation, the mapped value that is of the adjusted tone mapping curve and that is at the one or more third luminance feature values is reduced, so that all or a part of mapped values of the adjusted tone mapping curve is reduced, and all or a part of luminance of an image obtained through tone mapping on the image based on the adjusted tone mapping curve is lowered, to adapt to an application scenario covered by the second condition. In this way, luminance perception of the user is consistent in different application scenarios, and the display adaptation effect and user experience are improved. For example, when the terminal display screen size is larger than the reference display device size, the mapped values of the tone mapping curve are reduced to lower the luminance of the image. In this way, viewing luminance perception of the user on a large-sized display screen is the same as that on a small-sized display screen, and user visual comfort is improved.

In a possible implementation, the one or more third luminance feature values include one or more luminance feature values of a dark portion of the to-be-displayed image.

In this implementation, because human eyes are more sensitive to luminance of the dark portion, luminance of a dark portion of an image obtained through tone mapping on the image based on the adjusted tone mapping parameter is further lowered, to avoid more noise in an application scenario covered by the second condition. In this way, luminance perception on the dark portion of the user is consistent in different application scenarios, and the display adaptation effect and user experience are improved. For example, when the terminal display screen size is larger than the reference display device size, mapped values of the dark portion based on the tone mapping curve are reduced to further darken the dark portion of the image. In this way, viewing luminance perception of the user on the large-sized display screen is the same as that on the small-sized display screen, and the user visual comfort is improved.

In a possible implementation, adjusting the initial tone mapping parameter of the to-be-displayed image in the second manner further includes: obtaining one or more fourth luminance feature values of the to-be-displayed image; and adjusting the initial tone mapping parameter, so that an obtained slope that is of the adjusted tone mapping curve and that is at the one or more fourth luminance feature values is less than a slope that is of the initial tone mapping curve and that is at the one or more fourth luminance feature values.

In this implementation, the slope that is of the adjusted tone mapping curve and that is at the one or more fourth luminance feature values is reduced, so that all or a part of slopes of the adjusted tone mapping curve is reduced, and all or a part of contrast and luminance of an image obtained through tone mapping on the image based on the adjusted tone mapping curve is lowered, to prevent excessively high contrast that causes user discomfort, adapt to an application scenario covered by the second condition, and improve the display adaptation effect and user experience. For example, when the terminal display screen size is larger than the reference display device size, the slopes of the tone mapping curve are reduced to lower the contrast and luminance of the image. In this way, the contrast of the image viewed by the user on the large-sized display screen is consistent with perception of viewing contrast and luminance on the small-sized display screen, excessively high contrast due to the larger display screen and user discomfort caused by it are prevented, and the user visual comfort is improved.

In a possible implementation, adjusting the initial tone mapping parameter of the to-be-displayed image in the second manner further includes: obtaining a base layer and one or more enhancement layers of the to-be-displayed image, where a value obtained through mapping on a third feature value of any enhancement layer in the one or more enhancement layers based on the initial tone mapping curve of the any enhancement layer is a fourth feature value; and adjusting the initial tone mapping parameter of the any enhancement layer, so that an absolute value of a value obtained through mapping on the third feature value based on the adjusted tone mapping curve is less than an absolute value of the fourth feature value.

In this implementation, the third feature value and the fourth feature value may be positive values or negative values. When the value obtained through mapping on the third feature value based on the adjusted tone mapping curve is compared with the fourth feature value, the absolute values of the two values are compared.

In this implementation, after the base layer is mixed with one or more adjusted enhancement layers, the mapped value corresponding to the one or more enhancement layers in the image is reduced, so that a feature of the enhancement layers is weakened, fewer high-frequency components are reserved, and local contrast or luminance is lowered, that is, the pixel gradient is reduced. The enhancement layers include an edge layer and a texture layer. Therefore, image feature weakening includes edge sharpness weakening and weakening of texture details, to adapt to an application scenario covered by the second condition, avoid poor display effect caused by excessively high contrast and impact on viewing effect of the user, and improve the display adaptation effect, so that a complex image has better tone mapping effect and display effect. For example, when the terminal display screen size is larger than the reference display device size, mapped values of the tone mapping curve of the enhancement layer are reduced to lower local contrast, detail definition, and luminance of the image. In this way, the definition of the image viewed by the user on the large-sized display screen is consistent with perception of viewing definition and detail information on the small-sized display screen, excessively high contrast due to the larger display screen and user discomfort caused by it are prevented, and the user visual comfort is improved.

In a possible implementation, a reference tone mapping parameter of the to-be-displayed image is obtained. A terminal display device display capability in the terminal device information is obtained. The reference tone mapping parameter of the to-be-displayed image is adjusted based on the reference tone mapping parameter and the terminal display device display capability, to obtain the initial tone mapping parameter.

In this implementation, the reference tone mapping parameter of the to-be-displayed image is adjusted based on the reference tone mapping parameter and the display capability information of the display screen, so that the obtained initial tone mapping parameter is adapted to a terminal display device in display capability, and is used as a basis for adjusting the tone mapping parameter again with reference to other information of the terminal display device.

In a possible implementation, obtaining the reference information includes: obtaining the reference information from metadata of the to-be-displayed image; obtaining an index of the reference information from the metadata, and selecting the reference information from a plurality of pieces of preset reference information based on the index; or using preset reference information as the reference information.

In a possible implementation, obtaining the terminal device information includes: obtaining the terminal device information through measurement; selecting the terminal device information from a plurality of pieces of preset terminal information based on a preset index; or using preset terminal device information as the terminal device information.

According to a second aspect, an embodiment of this application provides an image encoding method. The method includes: writing a to-be-displayed image into a bitstream; and writing reference information of the to-be-displayed image into the bitstream, where the reference information includes at least one of a reference display device size, a reference viewing distance, a reference viewing angle, reference ambient light luminance, or reference display device resolution; and the reference information is for tone mapping on the to-be-displayed image.

In this embodiment of this application, tone mapping is performed on the to-be-displayed image based on the reference information in combination with terminal device information of this decoder of a corresponding type, to flexibly adapt to different environments and display devices, thereby effectively improving display adaptation effect, and improving tone mapping effect and display effect of the image. In addition, visual perception of a user is more consistent in different application scenarios, thereby improving viewing experience of the user.

In a possible implementation, the method further includes: writing a reference tone mapping parameter of the to-be-displayed image into the bitstream. The reference tone mapping parameter is for obtaining an initial tone mapping parameter, the reference information is used by the decoder to adjust the initial tone mapping parameter to obtain a tone mapping parameter, and the tone mapping parameter is for tone mapping on the to-be-displayed image.

In this implementation, the reference tone mapping parameter of the to-be-displayed image is adjusted based on the reference tone mapping parameter in combination with display capability information of a display screen of the decoder, so that the obtained initial tone mapping parameter is adapted to a terminal display device in display capability, and is used as a basis for adjusting the tone mapping parameter again by the decoder with reference to other information of the terminal display device.

In a possible implementation, writing the reference information of the to-be-displayed image into the bitstream includes: writing the reference information into the bitstream; or writing an index of the reference information into the bitstream.

In a possible implementation, the method further includes: writing one or more luminance feature values of the to-be-displayed image into the bitstream. The one or more luminance feature values are used by the decoder to adjust the initial tone mapping parameter to obtain the tone mapping parameter.

In this implementation, the tone mapping parameter adjusted by the decoder based on the one or more luminance feature values can be flexibly adapted to different environments and display devices, thereby effectively improving the display adaptation effect, and improving the tone mapping effect and display effect of the image. In addition, the visual perception of the user is more consistent in different application scenarios, thereby improving the viewing experience of the user.

According to a third aspect, an embodiment of this application provides a tone mapping apparatus, including a module configured to perform the method according to any one of the first aspect or the possible implementations of the first aspect.

For example, the apparatus may include:

a receiving module, configured to: obtain a to-be-displayed image;
obtain reference information, where the reference information includes at least one of a reference display device size, a reference viewing distance, a reference viewing angle, reference ambient light luminance, or reference display device resolution; and
obtain terminal device information, where the terminal device information includes at least one of a terminal display device size, a user viewing distance, a user viewing angle, ambient light luminance, or terminal display device resolution; and
a tone mapping module, configured to perform tone mapping on the to-be-displayed image based on the reference information and the terminal device information of a corresponding type.

In this embodiment of this application, in performing tone mapping on the to-be-displayed image based on the reference information and the terminal device information of the corresponding type, the reference display device size corresponds to the terminal display device size, the reference viewing distance corresponds to the user viewing distance, the reference viewing angle corresponds to the user viewing angle, the reference ambient light luminance corresponds to the ambient light luminance, and the reference display device resolution corresponds to the terminal display device resolution.

In a possible implementation, performing tone mapping on the to-be-displayed image based on the reference information and the terminal device information of the corresponding type includes: obtaining a tone mapping parameter based on the reference information and the terminal device information of the corresponding type; and performing tone mapping on the to-be-displayed image based on the tone mapping parameter.

In a possible implementation, obtaining the tone mapping parameter based on the reference information and the terminal device information of the corresponding type includes: adjusting an initial tone mapping parameter of the to-be-displayed image based on the reference information and the terminal device information of the corresponding type, to obtain the tone mapping parameter.

In a possible implementation, adjusting the initial tone mapping parameter of the to-be-displayed image based on the reference information and the terminal device information of the corresponding type, to obtain the tone mapping parameter includes: when a relationship between the reference information and the terminal device information meets a first condition, adjusting the initial tone mapping parameter of the to-be-displayed image in a first manner, to obtain the adjusted tone mapping parameter; and when a relationship between the reference information and the terminal device information meets a second condition, adjusting the initial tone mapping parameter of the to-be-displayed image in a second manner, to obtain the tone mapping parameter. The initial tone mapping parameter represents an initial tone mapping curve, and the tone mapping parameter represents an adjusted tone mapping curve.

In a possible implementation, the first condition includes: at least one of the following: the terminal display screen size is smaller than the reference display device size, the user viewing distance is greater than the reference viewing distance, the user viewing angle deviates from the reference viewing angle, the ambient light luminance is greater than the reference ambient light luminance, or the terminal display device resolution is less than the reference display device resolution.

In a possible implementation, adjusting the initial tone mapping parameter of the to-be-displayed image in the first manner includes: obtaining one or more first luminance feature values of the to-be-displayed image; and adjusting the initial tone mapping parameter, so that an obtained mapped value that is of the adjusted tone mapping curve and that is at the one or more first luminance feature values is greater than a mapped value that is of the initial tone mapping curve and that is at the one or more first luminance feature values.

In a possible implementation, adjusting the initial tone mapping curve of the to-be-displayed image in the first manner further includes: obtaining one or more second luminance feature values of the to-be-displayed image; and adjusting the initial tone mapping curve, so that an obtained slope that is of the adjusted tone mapping curve and that is at the one or more second luminance feature values is greater than a slope that is of the initial tone mapping curve and that is at the one or more second luminance feature values.

In a possible implementation, adjusting the initial tone mapping parameter of the to-be-displayed image in the first manner further includes: obtaining a base layer and one or more enhancement layers of the to-be-displayed image, where a value obtained through mapping on a first feature value of any enhancement layer in the one or more enhancement layers based on the initial tone mapping curve of the any enhancement layer is a second feature value; and adjusting the initial tone mapping parameter of the any enhancement layer, so that an absolute value of a value obtained through mapping on the first feature value based on the adjusted tone mapping curve is greater than an absolute value of the second feature value.

In this implementation, the first feature value and the second feature value may be positive values or negative values. When the value obtained through mapping on the first feature value based on the adjusted tone mapping curve is compared with the second feature value, the absolute values of the two values are compared.

In a possible implementation, the second condition includes: at least one of the following: the terminal display screen size is larger than the reference display device size, the user viewing distance is less than the reference viewing distance, the ambient light luminance is less than the reference ambient light luminance, or the terminal display device resolution is greater than the reference display device resolution.

In a possible implementation, adjusting the initial tone mapping parameter of the to-be-displayed image in the second manner includes: obtaining one or more third luminance feature values of the to-be-displayed image; and adjusting the initial tone mapping parameter, so that an obtained mapped value that is of the adjusted tone mapping curve and that is at the one or more third luminance feature values is less than a mapped value that is of the initial tone mapping curve and that is at the one or more third luminance feature values.

In a possible implementation, the one or more third luminance feature values include: one or more luminance feature values of a dark portion of the to-be-displayed image.

In a possible implementation, adjusting the initial tone mapping parameter of the to-be-displayed image in the second manner further includes: obtaining one or more fourth luminance feature values of the to-be-displayed image; and adjusting the initial tone mapping parameter, so that an obtained slope that is of the adjusted tone mapping curve and that is at the one or more fourth luminance feature values is less than a slope that is of the initial tone mapping curve and that is at the one or more fourth luminance feature values.

In a possible implementation, adjusting the initial tone mapping parameter of the to-be-displayed image in the second manner further includes: obtaining a base layer and one or more enhancement layers of the to-be-displayed image, where a value obtained through mapping on a third feature value of any enhancement layer in the one or more enhancement layers based on the initial tone mapping curve of the any enhancement layer is a fourth feature value; and adjusting the initial tone mapping parameter of the any enhancement layer, so that an absolute value of a value obtained through mapping on the third feature value based on the adjusted tone mapping curve is less than an absolute value of the fourth feature value.

In this implementation, the third feature value and the fourth feature value may be positive values or negative values. When the value obtained through mapping on the third feature value based on the adjusted tone mapping curve is compared with the fourth feature value, the absolute values of the two values are compared.

In a possible implementation, the tone mapping module is further configured to: obtain reference tone mapping of the to-be-displayed image; obtain a terminal display device display capability in the terminal device information; and adjust the reference tone mapping parameter of the to-be-displayed image based on the reference tone mapping parameter and the terminal display device display capability, to obtain the initial tone mapping parameter.

In a possible implementation, obtaining the reference information includes: obtaining the reference information from metadata of the to-be-displayed image; obtaining an index of the reference information from the metadata, and selecting the reference information from a plurality of pieces of preset reference information based on the index; or using preset reference information as the reference information.

In a possible implementation, obtaining the terminal device information includes: obtaining the terminal device information through measurement; selecting the terminal device information from a plurality of pieces of preset terminal information based on a preset index; or using preset terminal device information as the terminal device information.

It should be understood that the third aspect corresponds to the technical solution in the first aspect. Therefore, beneficial effect obtained in the possible implementations is similar, and details are not described herein again.

According to a fourth aspect, an embodiment of this application provides an image encoding apparatus. The apparatus includes a module configured to perform the method according to any one of the second aspect or the possible implementations of the second aspect.

For example, the apparatus may include:

an encoding module, configured to: write a to-be-displayed image into a bitstream; and write reference information of the to-be-displayed image into the bitstream, where the reference information includes at least one of a reference display device size, a reference viewing distance, a reference viewing angle, reference ambient light luminance, or reference display device resolution; and the reference information is for tone mapping on the to-be-displayed image; and

a sending module, configured to send the bitstream.

In a possible implementation, the encoding module is further configured to: write a reference tone mapping parameter of the to-be-displayed image into the bitstream. The reference tone mapping parameter is for obtaining an initial tone mapping parameter, the reference information is used by the decoder to adjust the initial tone mapping parameter to obtain a tone mapping parameter, and the tone mapping parameter is for tone mapping on the to-be-displayed image.

In a possible implementation, writing the reference information of the to-be-displayed image into the bitstream includes: writing the reference information into the bitstream; or writing an index of the reference information into the bitstream.

In a possible implementation, the encoding module is further configured to: write one or more luminance feature values of the to-be-displayed image into the bitstream. The one or more luminance feature values are used by the decoder to adjust the initial tone mapping parameter to obtain the tone mapping parameter.

According to a fifth aspect, an embodiment of this application provides an electronic device, including a memory and a processor that are coupled to each other. The processor invokes program code stored in the memory to perform the method in any one of the first aspect or the possible implementations of the first aspect.

It should be understood that for details of technical effect that can be achieved in the fifth aspect, refer to the descriptions of technical effect brought by any one of the first aspect or the possible implementations of the first aspect. Details are not described herein again.

According to a sixth aspect, an embodiment of this application provides an electronic device, including a memory and a processor that are coupled to each other. The processor invokes program code stored in the memory to perform the method in any one of the second aspect or the possible implementations of the second aspect.

It should be understood that for details of technical effect that can be achieved in the sixth aspect, refer to the descriptions of technical effect brought by any one of the second aspect or the possible implementations of the second aspect. Details are not described herein again.

According to a seventh aspect, an embodiment of this application provides a tone mapping system, including the tone mapping apparatus according to any one of the third aspect and the possible implementations of the third aspect and the image encoding apparatus according to any one of the fourth aspect and the possible implementations of the fourth aspect, or including the electronic device according to the fifth aspect and the electronic device according to the sixth aspect.

It should be understood that for details of technical effect that can be achieved in the seventh aspect, refer to the descriptions of technical effect brought by any one of the first aspect or the possible implementations of the first aspect, and the descriptions of technical effect brought by any one of the second aspect or the possible implementations of the second aspect. Details are not described herein again.

According to an eighth aspect, an embodiment of this application provides a structure of a bitstream. The bitstream includes encoded data of an image and a parameter required for processing the image, and the parameter required for processing the image includes the reference information according to any one of the first aspect, the possible implementations of the first aspect, the second aspect, and the possible implementations of the second aspect. The reference information includes at least one of a reference display device size, a reference viewing distance, a reference viewing angle, reference ambient light luminance, or reference display device resolution.

In a possible implementation, the bitstream further includes a reference tone mapping parameter. The reference tone mapping curve parameter is for obtaining an initial tone mapping parameter, the reference information is used by a decoder to adjust the initial tone mapping parameter to obtain a tone mapping parameter, and the tone mapping parameter is for tone mapping on the to-be-displayed image.

In a possible implementation, the bitstream includes an index of the reference information.

In a possible implementation, the bitstream includes one or more luminance feature values.

According to a ninth aspect, an embodiment of this application provides a computer-readable storage medium, including a program or instructions. When the program or the instructions are run on a computer, the method in any one of the first aspect or the possible implementations of the first aspect is performed, or the method in any one of the second aspect or the possible implementations of the second aspect is performed.

It should be understood that for details of technical effect that can be achieved in the seventh aspect, refer to the descriptions of technical effect brought by any one of the first aspect or the possible implementations of the first aspect, or any one of the second aspect or the possible implementations of the second aspect. Details are not described herein again.

According to a tenth aspect, an embodiment of this application provides a computer program product, including a program or instructions. When the program or the instructions are run on a computer, the method in any one of the first aspect or the possible implementations of the first aspect is performed, or the method in any one of the second aspect or the possible implementations of the second aspect is performed.

It should be understood that for details of technical effect that can be achieved in the eighth aspect, refer to the descriptions of technical effect brought by any one of the first aspect or the possible implementations of the first aspect, or any one of the second aspect or the possible implementations of the second aspect. Details are not described herein again.

## BRIEF DESCRIPTION OF DRAWINGS

FIG. 1 is a block diagram of a codec system to which an embodiment of this application is applied;
FIG. 2A is a block diagram of a content supply system for implementing a content delivery service to which an embodiment of this application is applied;
FIG. 2B is a diagram of an example structure of a terminal device 2106 in FIG. 2A;
FIG. 3A is an operating flowchart of a streaming media system to which an embodiment of this application is applied;
FIG. 3B is a diagram of an architecture of a streaming media system to which an embodiment of this application is applied;
FIG. 4A is a diagram of a possible system architecture to which an embodiment of this application is applicable;
FIG. 4B is a diagram of a structure of an image processing system according to an embodiment of this application;
FIG. 5 is a schematic flowchart of a tone mapping method according to an embodiment of this application;
FIG. 6 is an example diagram of an initial tone mapping parameter adjustment manner according to an embodiment of this application;
FIG. 7 is an example diagram of an initial tone mapping parameter adjustment manner according to an embodiment of this application;
FIG. 8 is an example diagram of an initial tone mapping parameter adjustment manner of an enhancement layer according to an embodiment of this application;
FIG. 9 is an example diagram of an initial tone mapping parameter adjustment manner according to an embodiment of this application;
FIG. 10 is an example diagram of an initial tone mapping parameter adjustment manner according to an embodiment of this application;
FIG. 11 is a schematic flowchart of an image encoding method according to an embodiment of this application;
FIG. 12 is an example diagram of a tone mapping apparatus according to an embodiment of this application;
FIG. 13 is an example diagram of an image encoding apparatus according to an embodiment of this application;
FIG. 14 is an example diagram of an electronic device according to an embodiment of this application; and
FIG. 15 is an example diagram of an electronic device according to an embodiment of this application.

## DESCRIPTION OF EMBODIMENTS

In embodiments of this application, the term "at least one" indicates one or more, and "a plurality of" indicates two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one of a, b, or c may indicate a, b, c, a-b, a-c, b-c, or a-b-c, where any one of a, b, c, a-b, a-c, b-c, or a-b-c may include a single a, a single b, and a single c, or may include a plurality of a, a plurality of b, and a plurality of c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish different criteria, and are not used to indicate different content, priorities, or importance degrees of the two types of criteria.

In addition, the terms "include" and "have" in embodiments of this application, the claims, and the accompanying drawings are not exclusive. For example, a process, a method, a system, a product, or a device including a series of steps or modules/units is not limited to the listed steps or modules, and may further include steps or modules/units that are not listed.

For ease of understanding, technical terms in embodiments of this application are first explained.

(1) A dynamic range (dynamic range) is a ratio of maximum luminance to minimum luminance in a video or image signal.

(2) A high dynamic range (high dynamic range, HDR) image is an image whose dynamic range is from 0.001 nits to 10,000 nits, where nit is an illumination unit.

(3) A standard dynamic range (standard dynamic range, SDR) image is also referred to as a low dynamic range image, and is an image whose dynamic range is usually from 1 nit to 100 nits.

(4) Metadata (metadata) is used to record key information of an image in a scene or frame. In embodiments of this application, the metadata may further include a reference tone mapping parameter, representing a reference tone mapping curve, and reference information. The reference information includes at least one of a reference display device size, a reference viewing distance, a reference viewing angle, reference ambient light luminance, or reference display device resolution, and is used for tone mapping on an image. The metadata may further include dynamic metadata (dynamic metadata) and static metadata (static metadata). The dynamic metadata may be understood as data (also referred to as attribute information below) associated with each frame of image, and the data may change with different pictures. The static metadata may be understood as data associated with an image sequence, and the data remains unchanged in the image sequence.

(5) Tone mapping (tone mapping) is a process of mapping luminance of an image to a displayable luminance range of a target display device. Specifically, tone mapping may be classified into high-dynamic-to-low-dynamic mapping and low-dynamic-to-high-dynamic mapping. For example, an HDR image includes a 4000-nit illumination signal, but an HDR display capability of the target display device (a TV or an IPAD) is only 500 nits. Therefore, the 4000-nit signal needs to be mapped to the 500-nit device, that is, a process of tone mapping from high to low. For another example, an SDR image includes a 100-nit SDR signal, and a display capability of the target display device is 2000 nits. Therefore, the 100-nit signal needs to be mapped to the 2000-nit device, that is, a process of tone mapping from low to high.

(6) Image contrast is a measure of different luminance levels between a brightest feature value and a darkest feature value in the bright and dark areas of an image, that is, a grayscale difference of an image. A larger difference indicates higher contrast, and a smaller difference indicates lower contrast. A good contrast ratio of 120:1 can easily display vivid and rich colors, and when the contrast ratio reaches 300:1, colors of all levels can be supported.

(7) A mapping curve is a function curve for mapping luminance of an image. The mapping curve in embodiments of this application may include a sigmoid function curve, a cubic spline function curve, or a gamma function curve.

(8) Display adaptation (display adaptation) is tone processing on a video or image signal to adapt to a display feature of a target display device.

When a video or an image is displayed on an existing display device, luminance of the video or the image needs to be processed based on a display capability of the display device, so that the luminance of the video or the image is adapted to a displayable luminance range of the display device. This process is referred to as tone mapping (tone mapping, TM). However, there are various display devices at present, and there are differences in displayable luminance ranges of display screens and other aspects like sizes of displays. Therefore, in an existing solution, a mechanism of aligning a maximum value and a minimum value of an image with a maximum luminance value and a minimum luminance value of a display screen alone cannot achieve optimal display adaptation effect. Therefore, this application provides a tone mapping method and apparatus. When tone mapping is performed on an image, other information such as a terminal display device size and a user viewing distance is also considered, thereby improving display adaptation effect.

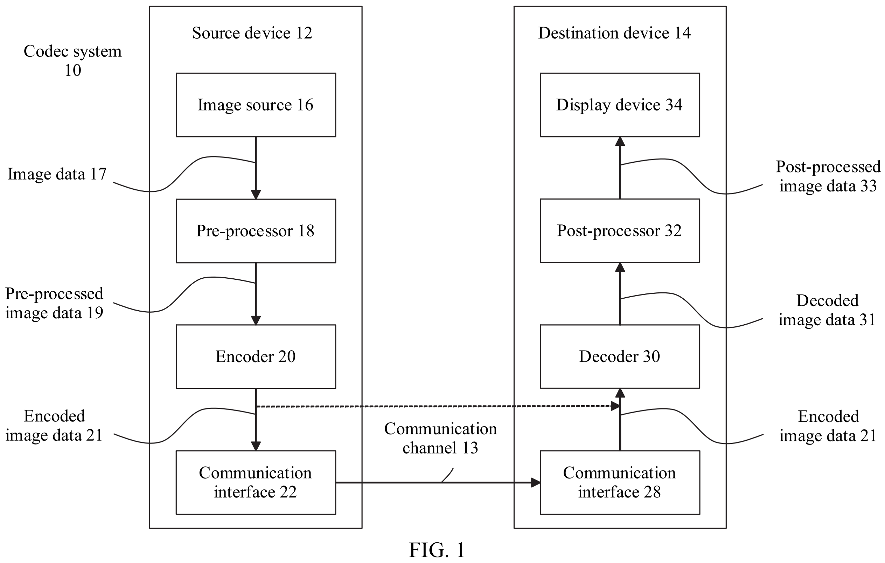

The following describes, with reference to FIG. 1, a codec system to which this application is applied. FIG. 1 is a block diagram of a codec system to which an embodiment of this application is applied. For example, a video codec system 10 (or a codec system 10 for short) to which a technology of this application may be applied. A video encoder 20 (or an encoder 20 for short) and a video decoder 30 (or a decoder 30 for short) of the video codec system 10 represent devices that may be configured to perform techniques in accordance with various examples described in this application.

As shown in FIG. 1, the codec system 10 includes a source device 12. The source device 12 is configured to provide encoded data 21 such as an encoded image to a destination device 14 for decoding the encoded data.

The source device 12 includes the encoder 20, and may optionally include an image source 16, an image pre-processing unit 18 (or a pre-processing unit), and a communication interface or communication unit 22.

The image source 16 may include or be any type of image capture device, for example, for capturing a real-world image, and/or any type of image generating device, for example, a computer graphics processing unit for generating a computer animated image, or any type of other device for obtaining and/or providing a real-world image, a computer generated image (for example, screen content, a virtual reality (virtual reality, VR) image and/or any combination thereof (for example, an augmented reality (augmented reality, AR) image)). The image source may be any type of memory or storage storing any of the aforementioned images.

To distinguish processing performed by the pre-processor 18 or the pre-processing unit 18, an image or image data 17 may also be referred to as a raw image or raw image data 17.

The pre-processor 18 is configured to: receive the (raw) image data 17 and pre-process the image data 17 to obtain a pre-processed image 19 or pre-processed image data 19. For example, pre-processing performed by the pre-processor 18 may include trimming, color format conversion (for example, from RGB to YCbCr), color correction, or de-noising. It may be understood that the pre-processing unit 18 may be an optional component.

The video encoder 20 is configured to receive pre-processed image data 19 and provide encoded image data 21.

The communication interface 22 in the source device 12 may be configured to: receive the encoded image data 21 and send the encoded image data 21 (or any further processed version thereof) over a communication channel 13 to another device like the destination device 14, or any other device, for storage or direct reconstruction.

The destination device 14 includes the decoder 30 (for example, the video decoder 30), and may additionally, that is, optionally, include a communication interface or communication unit 28, a post-processor 32 (or a post-processing unit 32), and a display device 34.

The communication interface 28 in the destination device 14 is configured to: receive the encoded image data 21 (or any further processed version thereof) directly from the source device 12 or from any other source device, for example, a storage device, for example, an encoded image data storage device, and provide the encoded image data 21 to the decoder 30.

The communication interface 22 and the communication interface 28 may be configured to send or receive the encoded image data 21 or encoded data over a direct communication link between the source device 12 and the destination device 14, for example, a direct wired or wireless connection, or over any type of network, for example, a wired or wireless network or any combination thereof, or any type of private and public network, or any kind of combination thereof.

The communication interface 22 may be, for example, configured to package the encoded image data 21 into an appropriate format, for example, a packet, and/or process the encoded image data using any type of transmission encoding or processing for transmission over a communication link or communication network.

The communication interface 28, forming the counterpart of the communication interface 22, may be, for example, configured to: receive the transmitted data and process the transmitted data using any type of corresponding transmission decoding or processing and/or de-packaging to obtain the encoded image data 21.

Both the communication interface 22 and communication interface 28 may be configured as unidirectional communication interfaces as indicated by an arrow for the communication channel 13 in FIG. 1 pointing from the source device 12 to the destination device 14, or bi-directional communication interfaces, and may be configured, for example, to send and receive messages, for example, to set up a connection, acknowledge and exchange any other information related to the communication link and/or data transmission, for example, encoded image data transmission.

The decoder 30 is configured to receive the encoded image data 21, and provide decoded image data 31 or a decoded image 31.

The post-processor 32 in the destination device 14 is configured to post-process the decoded image data 31 (also referred to as reconstructed image data), for example, the decoded image 31, to obtain post-processed image data 33, for example, a post-processed image 33. Post-processing performed by the post-processing unit 32 may include, for example, color format conversion (for example, from YCbCr to RGB), color correction, trimming, or resampling, or any other processing, for example, for preparing the decoded image data 31 for display, for example, by the display device 34.

The display device 34 in the destination device 14 is configured to receive the post-processed image data 33 for displaying the image, for example, to a user or viewer. The display device 34 may be or include any type of display for representing the reconstructed image, for example, an integrated or external display screen or display. For example, the display screen may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS), a digital light processor (digital light processor, DLP), or any type of other display screen.

Although FIG. 1 depicts the source device 12 and the destination device 14 as separate devices, embodiments of devices may alternatively include both or both functionalities, that is, the source device 12 or corresponding functionality and the destination device 14 or corresponding functionality. In such embodiments the source device 12 or corresponding functionality and the destination device 14 or corresponding functionality may be implemented using the same hardware and/or software or by separate hardware and/or software or any combination thereof.

As will be apparent for skilled persons based on the description, the existence and (exact) split of functionalities of the different units or functionalities in the source device 12 and/or the destination device 14 as shown in FIG. 1 may vary depending on the actual device and application.

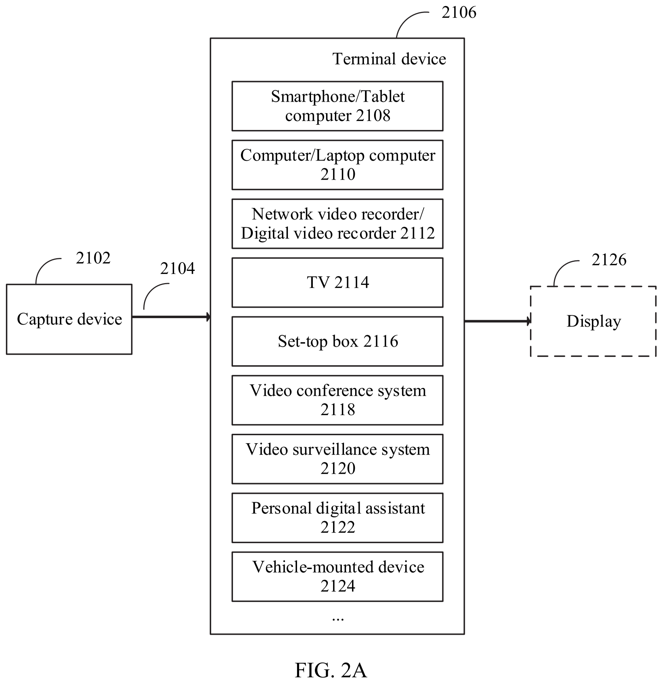

The following describes, with reference to FIG. 2A, a content supply system for a content delivery service to which this application is applied. FIG. 2A is a block diagram of a content supply system for implementing a content delivery service to which an embodiment of this application is applied. This content supply system 2100 includes a capture device 2102, a terminal device 2106, and (optionally) a display 2126. The capture device 2102 communicates with the terminal device 2106 over a communication link 2104. The communication link may include the foregoing communication channel 13. The communication link 2104 includes but not limited to Wi-Fi, Ethernet, wired, wireless (3G/4G/5G), USB, or any kind of combination thereof, or the like.

The capture device 2102 generates data, and may encode the data using the encoding method as shown in the above embodiments. Alternatively, the capture device 2102 may distribute the data to a streaming server (not shown in the figure), and the server encodes the data and transmits encoded data to the terminal device 2106. The capture device 2102 includes but not limited to a camera, a smartphone or tablet computer, a computer or laptop computer, a video conference system, a PDA, a vehicle-mounted device, or any combination thereof. For example, the capture device 2102 may include the foregoing source device 12. When the data includes a video, the video encoder 20 in the capture device 2102 may actually perform video encoding processing. When the data includes an audio (that is, a voice), an audio encoder 20 in the capture device 2102 may actually perform audio encoding processing. For some practical scenarios, the capture device 2102 distributes encoded video data and encoded audio data by multiplexing them together. For other practical scenarios, for example, in the video conference system, the encoded audio data and the encoded video data are not multiplexed. The capture device 2102 distributes the encoded audio data and the encoded video data to the terminal device 2106 separately.

The terminal device 2106 in the content supply system 2100 receives and reproduces the encoded data. The terminal device 2106 may be a device with data receiving and recovering capabilities, such as a smartphone or tablet computer 2108, a computer or laptop computer 2110, a network video recorder (network video recorder, NVR)/digital video recorder (digital video recorder, DVR) 2112, a TV 2114, a set-top box (set-top box, STB) 2116, a video conference system 2118, a video surveillance system 2120, a personal digital assistant (personal digital assistant, PDA) 2122, a vehicle-mounted device 2124, or any combination thereof, or the like capable of decoding the encoded data. For example, the terminal device 2106 may include the foregoing destination device 14. When the encoded data includes a video, the video decoder 30 in the terminal device is prioritized to perform video decoding. When the encoded data includes audio, an audio decoder in the terminal device is prioritized to perform audio decoding processing. The terminal device 2106 may be a video playing application, a streaming media playing application, a streaming media playing platform, a live streaming platform, or the like that runs on the terminal device.

For a terminal device with a display, for example, the smartphone or tablet computer 2108, the computer or laptop computer 2110, the NVR/DVR 2112, the TV 2114, the PDA 2122, or the vehicle-mounted device 2124, the terminal device can feed decoded data to its display. For a terminal device equipped with no display, for example, the STB 2116, the video conference system 3118, or the video surveillance system 2120, an external display 2126 is connected to the device to receive and display the decoded data.

When each device in this system performs encoding or decoding, the image encoding device or the image decoding device, as shown in the foregoing embodiments, can be used.

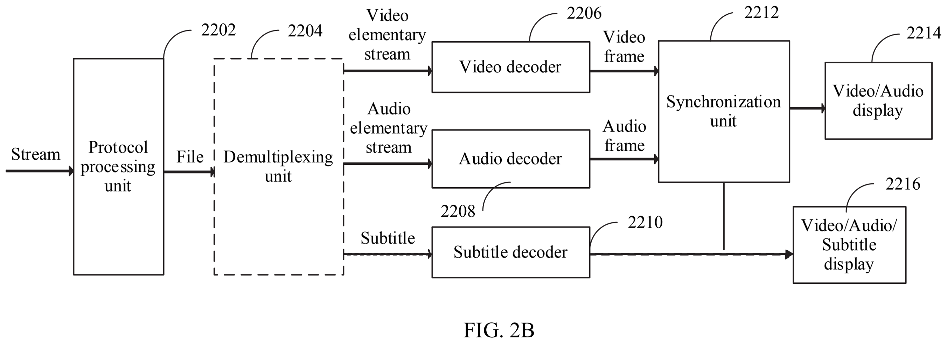

FIG. 2B is a diagram of an example structure of the terminal device 2106 in FIG. 2A. After the terminal device 2106 receives a bitstream from the capture device 2102, a protocol processing unit 2202 analyzes a transmission protocol of the bitstream. The protocol includes but is not limited to the real-time streaming protocol (Real-time Streaming Protocol, RTSP), the hypertext transfer protocol (Hypertext Transfer Protocol, HTTP), the HTTP live streaming protocol (HTTP Live streaming protocol, HLS), the MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-time Messaging Protocol, RTMP), or any combination thereof.

After the protocol processing unit 2202 processes the stream, a stream file is generated. The file is output to a demultiplexing unit 2204. The demultiplexing unit 2204 can separate multiplexed data into the encoded audio data and the encoded video data. As described above, for other practical scenarios, for example, in the video conference system, the encoded audio data and the encoded video data are not multiplexed. In this situation, the encoded data is transmitted to a video decoder 3206 and an audio decoder 2208 without through the demultiplexing unit 2204.

Via the demultiplexing processing, a video elementary stream (ES), an audio ES, and optionally a subtitle are generated. The video decoder 2206, which includes the video decoder 30 as explained in the foregoing embodiments, decodes the video ES using the decoding method as shown in the foregoing embodiments to generate a video frame, and feeds the data to a synchronization unit 2212. The audio decoder 2208 decodes the audio ES to generate an audio frame, and feeds the data to the synchronization unit 2212. Alternatively, the video frame may be stored in a buffer (not shown in the figure) before being fed to the synchronization unit 2212. Similarly, the audio frame may be stored in a buffer (not shown in the figure) before being fed to the synchronization unit 2212.

The synchronization unit 2212 synchronizes the video frame and the audio frame, and supplies the video/audio to a video/audio display 3214. For example, the synchronization unit 2212 synchronizes presentation of video and audio information. Information may be coded in syntax using time stamps concerning presentation of coded audio and visual data and time stamps concerning delivery of a data stream.

If a subtitle is included in the stream, a subtitle decoder 2210 decodes the subtitle, and synchronizes it with the video frame and the audio frame, and supplies the video/audio/subtitle to a video/audio/subtitle display 2216.

The present invention is not limited to the foregoing system, and either the image encoding device or the image decoding device in the foregoing embodiments can be incorporated into other system, for example, a car system.

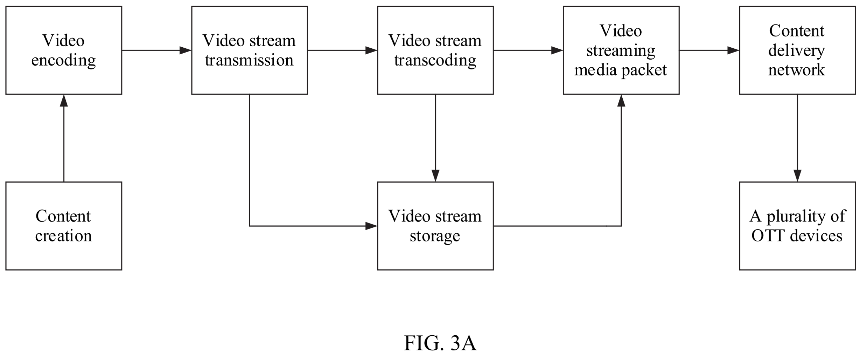

The following describes, with reference to FIG. 3A, a streaming media system to which an embodiment of this application is applicable. FIG. 3A is an operating flowchart of a streaming media system to which an embodiment of this application is applied.

The streaming media system includes a content creation module, which generates required content data, for example, a video or an audio. The streaming media system further includes a video encoding module, which encodes generated content via an encoder. The streaming media system further includes a video stream transmission module, which transmits an encoded video in a form of a bitstream. Optionally, a format of a video stream may be converted into a bitstream format of a transport protocol commonly used by an OTT (over-the-top) device. For example, the protocol includes but is not limited to the real-time streaming protocol (Real-time Streaming Protocol, RTSP), the hypertext transfer protocol (Hypertext Transfer Protocol, HTTP), the HTTP live streaming protocol (HTTP Live streaming protocol, HLS), the MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-time Messaging Protocol, RTMP), or any combination thereof. Optionally, video stream storage may be performed to store an original format of the video stream and/or a plurality of converted bitstream formats, for ease of use. Further, the streaming media system further includes a video stream packaging module, configured to package the video stream to generate a packaged video stream. The packaged video stream may be referred to as a video streaming media packet. For example, the video streaming media packet may be generated based on a transcoded video stream or a stored video stream. Further, the streaming media system further includes a content delivery network (content distribution network, CDN), and the CDN is configured to deliver the video streaming media packet to a plurality of OTT devices, such as mobile phones, computers, tablets, and home projectors.

It should be noted that video encoding, video stream transmission, video stream transcoding, video stream storage, video streaming media packet generation, and the content delivery network may all be implemented on a cloud server.

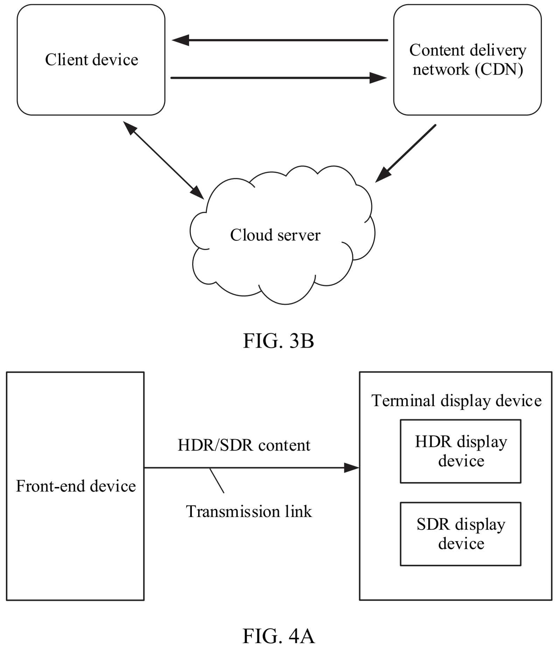

The following describes, with reference to FIG. 3B, an example architecture of a streaming media system in this application. The architecture of the streaming media system in this application includes a client device, a content delivery network, and a cloud server.

A user on the client device sends a play or playback request to a cloud platform. Optionally, content of the sent request may be a title of a movie or TV program to be played.

The cloud platform performs decision-making, replies to the client, and sends an address of the content requested by the client on the CDN to the client. Optionally, content sent to the client may be a URL (uniform resource locator). Specifically, a playback application service in the cloud platform checks user authorization and permission, and then determines which specific files are required to process the playback request by considering features of each client and current network conditions. It should be noted that the content delivery network (CDN) periodically reports a running status, a learned route, and available content (file) to a cache control service on the cloud platform.

Then the client sends a request to the CDN to play the content based on the address. The CDN provides the content for the client and finally completes the request of the client.

The following describes, with reference to FIG. 4A, a system architecture to which an embodiment of this application is applicable. FIG. 4A is a diagram of a possible system architecture to which an embodiment of this application is applicable. The system architecture in this embodiment of this application includes a front-end device, a transmission link and a terminal display device.

The front-end device is configured to collect or produce HDR/SDR content (for example, a HDR/SDR video or image).

In a possible embodiment, the front-end device may be further configured to extract corresponding metadata from the HDR content. The metadata may include global mapping information, local mapping information, and dynamic metadata and static metadata that correspond to the HDR content. The front-end device may send the HDR content and the metadata to the terminal display device over the transmission link. Specifically, the HDR content and the metadata may be transmitted in a form of one data packet, or separately transmitted in two data packets. This is not specifically limited in this embodiment of this application.

Optionally, the terminal display device may be configured to receive the metadata and HDR content, obtain, based on the global mapping information and local mapping information included in the corresponding metadata extracted from the HDR content, and information about the terminal display device, a mapping curve for global tone mapping and local tone mapping on the HDR content, convert the HDR content into display content adapted to an HDR display device or an SDR device in the terminal display device, and display the display content. It should be understood that, in different embodiments, the terminal display device may include a display device having a display capability with a lower dynamic range or a higher dynamic range than the HDR content generated by the front-end device. This is not limited in this application.

Optionally, in this application, the front-end device and the terminal display device may be independent and different physical devices. For example, the front-end device may be a video capture device, or may be a video production device. The video capture device may be a device like a camera, a camera, or an image drawing machine. The terminal display device may be any of devices with video play functions, such as virtual reality (virtual reality, VR) glasses, mobile phones, tablets, TVs, or projectors.

Optionally, the transmission link between the front-end device and the terminal display device may be a wireless connection or a wired connection. The wireless connection may use technologies such as long term evolution (long term evolution, LTE), 5th generation (5th generation, 5G), and future mobile communication. The wireless connection may further include technologies such as wireless fidelity (wireless-fidelity, Wi-Fi), Bluetooth, and near field communication (Near Field Communication, NFC). The wired connection may include an Ethernet connection, a local area network connection, and the like. This is not specifically limited.

In this application, functions of the front-end device and functions of the terminal display device may be alternatively integrated into a same physical device, for example, a terminal device having a video shooting function, like a mobile phone or a tablet. In this application, a part of the functions of the front-end device and a part of the functions of the terminal display device may be alternatively integrated into a same physical device. This is not specifically limited.

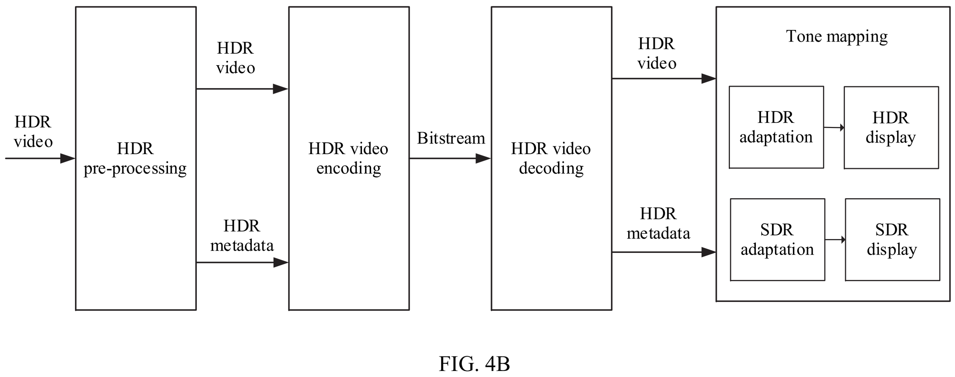

The following describes, with reference to FIG. 4B, an end-to-end image processing system provided in an embodiment of this application. The system may be applied to the system architecture shown in FIG. 4A. FIG. 4B is a diagram of a structure of an image processing system according to an embodiment of this application. In FIG. 4B, for example, an HDR video is used as an example of HDR/SDR content. The image processing system includes an HDR pre-processing module, an HDR video encoding module, an HDR video decoding module, and a tone mapping module.

The HDR pre-processing module and the HDR video encoding module may be located in the front-end device shown in FIG. 4A, and the HDR video decoding module and the tone mapping module may be located in the terminal display device shown in FIG. 4A.

The HDR pre-processing module is configured to: extract dynamic metadata (for example, a maximum value, a minimum value, an average value, and a change range of luminance) from the HDR video; determine mapping curve parameters based on the dynamic metadata and a display capability of a target display device; write the mapping curve parameters into the dynamic metadata to obtain HDR metadata; and transmit the HDR metadata. The HDR video may be captured, or may be an HDR video processed by a colorist. The display capability of the target display device is a displayable luminance range of the target display device.

The HDR video encoding module is configured to perform video encoding on the HDR video and the HDR metadata according to a video compression standard (for example, an AVS or HEVC standard) (for example, embed the HDR metadata into a user-defined portion of a bitstream), to output a corresponding bitstream (an AVS or HEVC bitstream).

The HDR video decoding module is configured to decode the generated bitstream (the AVS bitstream or the HEVC bitstream) according to a standard corresponding to a bitstream format, and output decoded HDR video and HDR metadata.

The tone mapping module is configured to: generate a mapping curve based on mapping curve parameters in the decoded HDR metadata; perform tone mapping (namely, HDR adaptation or SDR adaptation) on the decoded HDR video; and send an HDR-adapted video obtained through tone mapping to an HDR display terminal for display, or send an SDR-adapted video to an SDR display terminal for display.

For example, the HDR pre-processing module may exist in a video capture device or a video production device.

For example, the HDR video encoding module may exist in the video capture device or the video production device.

For example, the HDR video decoding module may exist in a set-top box, a TV display device, a mobile terminal display device, and a video conversion device like a live streaming or network video application.

For example, the tone mapping module may exist in the set-top box, the TV display device, the mobile terminal display device, and the video conversion device like the live streaming or network video application. More specifically, the tone mapping module may exist in a form of a chip or a software program in the set-top box, a TV display, and a mobile terminal display, and may exist in a form of a software program in the video conversion device like the live streaming or network video application.

In a possible embodiment, when both the tone mapping module and the HDR video decoding module exist in the set-top box, the set-top box may complete functions of receiving, decoding, and tone mapping of a video bitstream. The set-top box sends, through a high-definition multimedia interface (high-definition multimedia interface, HDMI), decoded video data to a display device for display, so that a user can enjoy video content.

With reference to specific accompanying drawings, the following describes a process in which the terminal display device performs tone mapping.

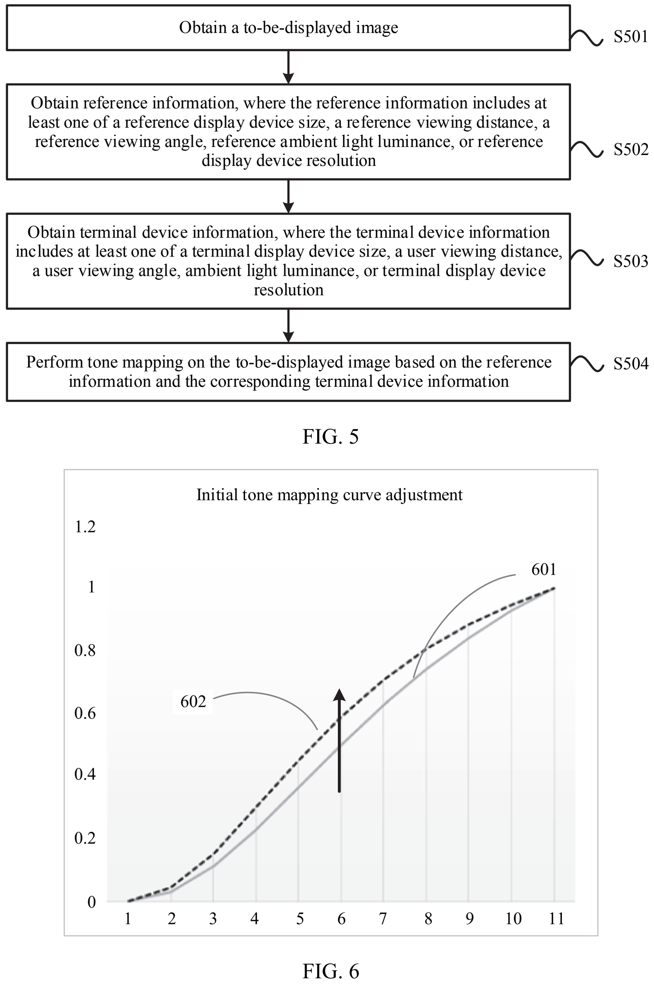

Refer to FIG. 5. FIG. 5 is a schematic flowchart of a tone mapping method according to an embodiment of this application. The method may be performed by a terminal display device, and specifically includes the following steps.

Step S501: Obtain a to-be-displayed image.

In this embodiment of this application, the to-be-displayed image may be an HDR image or video, or may be an SDR image or video. The to-be-displayed image may be an optical signal (that is, a linear signal), or may be an electrical signal (that is, a non-linear signal). This is not limited in this application. If the to-be-displayed image is the electrical signal, the electrical signal may be converted into an optical signal based on an opto-electronic transfer function.

In a possible embodiment, the to-be-displayed image is transmitted in a form of a bitstream. The terminal display device may receive the bitstream from a front-end device, and decode the bitstream to obtain data of the to-be-displayed image.

Optionally, the data of the to-be-displayed image includes image data, for example, pixel data. It should be understood that, in this embodiment of this application, a format of the image is not limited. The image data may be of any color space, for example, RGB or YUV, and the image data is of any bit width, for example, 8 bits, 10 bits, or 12 bits.

Optionally, the data of the to-be-displayed image includes metadata. It should be understood that a format of the metadata is not limited in this embodiment of this application. The metadata includes data such as a data format, area division information, area traversal order information, an image feature, or a mapping curve parameter of the image or video, and one or more metadata information units. The metadata information units include data such as coordinate information, image features, and curve parameters. For example, the metadata may include reference information of the to-be-displayed image, for example, a reference display device size, a reference viewing distance, a reference viewing angle, reference ambient light luminance, or reference display device resolution, and the metadata may further include tone mapping information, for example, a tone mapping curve.

Optionally, a decoding device (for example, a set-top box) receives the bitstream from the front-end device, decodes the bitstream to obtain the data of the to-be-displayed image, and then sends decoded data of the to-be-displayed image to the terminal display device.

Optionally, a process of decoding the bitstream includes decoding the received bitstream via a decoder, to obtain the data of the to-be-displayed image. For example, the decoder may be an HEVC decoder, a JPEG decoder, a ProRes decoder, or a VVC decoder.

In another possible embodiment, the to-be-displayed image is an image on which software processing may be performed. The software processing includes but is not limited to tone mapping, dehazing (dehazing), deblurring (deblurring), zooming in/out, color gamut transformation, and neural network-based graphics processing.

In another possible embodiment, the to-be-displayed image may be an image on which hardware processing is performed. The hardware processing includes but is not limited to tone mapping, dehazing (dehazing), deblurring (deblurring), zooming in/out, color gamut transformation, and neural network-based graphics processing.

Step S502: Obtain reference information, where the reference information includes at least one of the reference display device size, the reference viewing distance, the reference viewing angle, the reference ambient light luminance, or the reference display device resolution.

In this embodiment of this application, the reference information of the to-be-displayed image is obtained. The reference information is for tone mapping on the to-be-displayed image, to improve viewing effect of a user, and includes at least one of the reference display device size, the reference viewing distance, the reference viewing angle, the reference ambient light luminance, or the reference display device resolution. Optionally, the reference information may be used to adjust a reference tone mapping curve in combination with terminal device information.

Optionally, the reference display device size may be a size of a display device used when the to-be-displayed image is produced. Optionally, the reference display device size includes at least one of a length, a width, or a diagonal length of the display device. This is not limited in this application. Optionally, the reference display device size may be obtained through conversion based on at least one of the length, the width, or the diagonal length of the display device. This is not limited in this application. Optionally, a reason why conversion needs to be performed may be an appearance reason, for example, bending or folding, or may be a visual reason, for example, a display size change caused by vision correction performed by a VR device. Optionally, the reference display device size may be obtained from the metadata of the to-be-displayed image; an index of the reference display device size may be obtained from the metadata, and the reference device size is selected from a plurality of preset reference display device sizes based on the index; or a preset reference display device size may be directly used as the reference display device size. The index of the reference display device size may correspond to different standards to correspond to display device sizes specified in different standards, where the standards are, for example, 1920×1080HD, 1280×720HD 720P, and 3840×2160Ultra HD.

Optionally, the reference viewing distance may be a viewing distance of a reference display device used when the to-be-displayed image is produced. Optionally, the reference viewing distance may be a straight-line distance between the user and a central point of the display device, a vertical distance between the user and an imaging plane of the display device, or a straight-line distance between the user and a preset position of the imaging plane of the display device. This is not limited in this application. Optionally, the reference viewing distance may be obtained from the metadata of the to-be-displayed image; an index of the reference viewing distance may be obtained from the metadata, and the reference viewing distance is selected from a plurality of preset reference viewing distances based on the index; or a preset reference viewing distance may be directly used as the reference viewing distance.

Optionally, the reference viewing angle may be a viewing angle range of the reference display device used when the to-be-displayed image is produced. Optionally, the reference viewing angle may be a range of an angle of deviation from a vertical line perpendicular to the display device at a central point location, and the range of the angle is an angle range in which the user can accurately observe the to-be-displayed image. This is not limited in this application. Optionally, the reference viewing angle may be obtained from the metadata of the to-be-displayed image; an index of the reference viewing angle may be obtained from the metadata, and the reference viewing angle is selected from a plurality of preset reference viewing angles based on the index; or a preset reference viewing angle may be directly used as the reference viewing angle.

Optionally, the reference ambient light luminance may be ambient light luminance when the to-be-displayed image is produced. Optionally, the reference ambient light luminance may be obtained from the metadata of the to-be-displayed image; an index of the reference ambient light luminance may be obtained from the metadata, and the reference ambient light luminance is selected from a plurality of pieces of preset reference ambient light luminance based on the index; or preset reference ambient light luminance may be directly used as the reference ambient light luminance.

Optionally, the reference display device resolution may be resolution of the reference display device used when the to-be-displayed image is produced. Optionally, a value of the reference display device resolution may be obtained from the metadata of the to-be-displayed image; an index of the reference display device resolution may be obtained from the metadata, and the reference display device resolution is selected from a plurality of pieces of preset reference display device resolution based on the index; or preset reference display device resolution may be directly used as the reference display device resolution. The index of the reference display device resolution may correspond to different standards to correspond to display device resolution specified in different standards, for example, 1920×1080HD, 1280×720HD 720P, and 3840×2160Ultra HD standards.

Step S503: Obtain the terminal device information, where the terminal device information includes at least one of a terminal display device size, a user viewing distance, a user viewing angle, ambient light luminance, or terminal display device resolution.

In this embodiment of this application, the terminal device information is obtained, and is used to adjust the reference tone mapping curve in combination with the reference information.

Optionally, the terminal display device size includes at least one of a length, a width, or a diagonal length of the terminal display device. This is not limited in this application. Optionally, the terminal display device size may be obtained through conversion based on at least one of the length, the width, or the diagonal length of the display device. This is not limited in this application. Optionally, a reason why conversion needs to be performed may be an appearance reason, for example, bending or folding, or may be a visual reason, for example, a display size change caused by vision correction performed by a VR device. Optionally, the terminal device size may be obtained by actually measuring the terminal device, or selected from a plurality of preset terminal display device sizes based on a preset index. Alternatively, a preset terminal display device size may be directly used as the terminal display device size. The index may correspond to different standards to correspond to display device sizes specified in different standards, where the standards are, for example, 1920×1080HD, 1280×720HD 720P, and 3840×2160Ultra HD.

Optionally, the user viewing distance may be a straight-line distance between the user and a central point of the terminal display device, a vertical distance between the user and an imaging plane of the terminal display device, or a straight-line distance between the user and a preset position of the imaging plane of the terminal display device. This is not limited in this application. Optionally, a single user viewing distance may be obtained through actual measurement; or a plurality of user viewing distances may be obtained through actual measurement, and then a representative user viewing distance is selected through calculation. For example, a center of the plurality of user viewing distances may be selected as the user viewing distance. Optionally, the user viewing distance may be selected from a plurality of preset user viewing distances based on a preset index; or a preset user viewing distance may be directly used as the user viewing distance. Optionally, when there is a single user, the single user viewing distance may be obtained through actual measurement; or when there are a plurality of users, the preset user viewing distance may be directly used as the user viewing distance.

Optionally, the user viewing angle may be a range of an angle of deviation from a vertical line perpendicular to the display device at a central point location. Optionally, a single user viewing distance may be obtained through actual measurement; or a plurality of user viewing distances may be obtained through actual measurement, and then a representative user viewing angle is selected through calculation. For example, an average angle of the plurality of user viewing angles may be selected as the user viewing angle. Optionally, the user viewing angle may be selected from a plurality of preset user viewing angles based on a preset index; or a preset user viewing angle may be directly used as the user viewing angle. Optionally, when there is a single user, the single user viewing angle may be obtained through actual measurement; or when there are a plurality of users, the preset user viewing angle may be directly used as the user viewing angle.

Optionally, the ambient light luminance may be obtained through actual measurement by a sensor; the ambient light luminance may be selected from a plurality of pieces of preset ambient light luminance based on a preset index; or preset ambient light luminance may be directly used as the ambient light luminance.

Optionally, the terminal display device resolution may be an actual value of the terminal display device resolution, or selected from a plurality of pieces of preset terminal display device resolution based on an index. Alternatively, preset terminal display device resolution may be directly used as the terminal display device resolution. The index of the terminal display device resolution may correspond to different standards to correspond to display device resolution specified in different standards, for example, 1920×1080HD, 1280×720HD 720P, and 3840×2160Ultra HD standards.

In a possible embodiment, the tone mapping method further includes: adjusting a reference tone mapping parameter of the to-be-displayed image based on the reference tone mapping parameter and a terminal display device display capability, to obtain an initial tone mapping parameter.

In this embodiment of this application, the reference tone mapping parameter represents the reference tone mapping curve, and the initial tone mapping parameter represents an initial tone mapping curve.

First, the reference tone mapping parameter of the to-be-displayed image is obtained. Optionally, the reference tone mapping parameter may be obtained from the metadata of the to-be-displayed image. For example, the metadata may include a plurality of pieces of reference display device display capability information, for example, peak luminance, and an initial global tone mapping curve parameter for tone mapping on the peak luminance. Alternatively, the metadata may include histogram information and tone mapping curve parameter information, for example, in the ST2094-40 standard. Alternatively, the metadata may include the tone mapping curve parameter information, for example, in the ST2094-10 standard. Optionally, an index of the reference tone mapping parameter may be obtained from the metadata, and the reference tone mapping parameter is selected from a plurality of preset reference tone mapping curve parameters based on the index; or a preset reference tone mapping parameter may be directly used as the reference tone mapping parameter. Obtaining the reference tone mapping curve parameter from the metadata information may be obtaining from an SEI packaged through HEVC or VVC, a user-defined NAL unit, or a reserved packet unit, may be obtaining from APP extension information packaged in JFIF, or may be obtaining from a data segment packaged in MP4. This is not limited in this application.

Then, the terminal display device display capability in the terminal device information, for example, peak luminance and valley luminance of the terminal display device, is obtained. Optionally, a display screen display capability of the terminal display device may be obtained and used as the terminal display device display capability, the terminal display device display capability may be selected from a plurality of preset terminal display device display capabilities based on a preset index, or a preset terminal display device display capability may be directly used as the terminal display device display capability.

Optionally, the reference display device display capability in the reference information may be obtained to adjust the reference tone mapping parameter. The reference display device display capability may be a display capability of the reference display device used when the to-be-displayed image is produced, for example, peak luminance and valley luminance of the reference display device. Optionally, the reference display device display capability may be obtained from the metadata of the to-be-displayed image; an index of the reference display device display capability may be obtained from the metadata, and the reference display device display capability is selected from a plurality of preset reference display device display capabilities based on the index; or a preset reference display device display capability may be directly used as the reference display device display capability.

Finally, the reference tone mapping parameter of the to-be-displayed image is adjusted based on the reference tone mapping parameter and the terminal display device display capability, to obtain the initial tone mapping parameter.

In a possible embodiment, parameter information of the initial tone mapping curve may be obtained based on parameter information of the reference tone mapping curve and terminal display device display capability information.

Optionally, after the terminal display device display capability information is obtained, one or more pieces of appropriate preset display device information and one or more corresponding reference tone mapping curve parameters are selected based on the terminal display device display capability. Then, the initial tone mapping curve parameter is obtained based on the one or more corresponding reference tone mapping curve parameters, to adapt to the terminal display device display capability information of the terminal device.

Optionally, the metadata may include a plurality of pieces of preset display device information, for example, peak luminance, and an initial tone mapping curve parameter for tone mapping on the peak luminance. A format of the metadata is not limited in this application. The metadata may include histogram information and tone mapping curve parameter information, for example, in the ST2094-40 standard. Alternatively, the metadata may include the tone mapping curve parameter information, for example, in the ST2094-10 standard.

Optionally, the plurality of pieces of preset display device information, for example, the peak luminance, and a reference tone mapping curve parameter for tone mapping on the peak luminance, may be preset values preset locally.

Optionally, when a reference tone mapping curve parameter is obtained, parameter adjustment may be performed on the reference tone mapping curve parameter to adapt to terminal display device information.

Optionally, when a plurality of reference tone mapping curve parameters are obtained, the initial tone mapping curve parameter may be obtained in a weighted averaging manner based on a relationship between the terminal display device information and a plurality of pieces of preset display device information that correspond to the plurality of reference tone mapping curves.

Optionally, a tone mapping curve may be calculated based on a part of the parameter information of the reference tone mapping curve and the terminal display device information. The part of the parameter information of the reference tone mapping curve may be carried in the metadata, or may be a preset value preset locally.

In another possible embodiment, the parameter information of the initial tone mapping curve may be obtained based on the parameter information of the reference tone mapping curve, feature information of the image itself, and the terminal device information. The feature information of the image itself includes content feature information, for example, maximum, minimum, and average luminance of content, and feature information related to preset percentage distribution of the image. The parameter information of the reference tone mapping curve may be carried in the metadata, or may be a preset value preset locally. The feature information of the image itself may be carried in the metadata.

In another possible embodiment, the initial tone mapping curve parameter may be calculated based on the content feature information of the to-be-displayed image in the metadata. Optionally, a part of parameter values of the initial tone mapping curve may be preset values and do not need to be calculated.

It should be noted that the tone mapping curve includes various forms, for example, a sigmoid function curve, a cubic spline function curve, and a gamma function. This is not limited in the present invention.

For example, the following function may be used to obtain the initial tone mapping curve:

$$L' = F(L) = a \times \left( \frac{p \times L^n}{(p-1) \times L^n + 1} \right)^m + b$$

A mapping relationship between normalized HDR/SDR source data and normalized HDR display data may be obtained based on the curve. L may be R, G, or B in the RGB color gamut, or a maximum value max(R, G, B) in R, G, and B, or luminance Y in the YUV color gamut, or a luminance component L in the Lab color gamut. L and L' may be normalized optical signals or electrical signals. This is not limited in the present invention.

For example, in the function, m may be preset to 2.4, n may be preset to 1, and b may be preset to the valley luminance of the terminal display device.

A process of obtaining the parameter p in the function based on the feature information of the image and a preset relationship is as follows: First, the feature information of the image is obtained from the metadata, including a maximum value maxL, a minimum value minL, and an average value avgL. Then, p is obtained based on the feature information of the image and the preset relationship.

Optionally, p may be obtained based on avgL and the preset relationship:

$$p = \begin{cases} p_{valueH0} & avgL > TPH0 \\ p_{valueH0} \times g0(w0) + p_{valueL0} \times (1 - g0(w0)) & TPL0 \leq avgL \leq TPH0 \\ p_{valueL0} & avgL < TPL0 \end{cases}$$

$P_{valueH0}$, $P_{valueL0}$, TPH0, and TPL0 all are preset parameters. $P_{valueu0}$ may be set to 3.5, $P_{valueL0}$ may be set to 4.0, TPH0 may be set to 0.6, and TPL0 may be set to 0.3.

Optionally, p may be obtained based on maxL and the preset relationship:

$$p = \begin{cases} p_{deltaH1} & maxL > TPH1 \\ p_{deltaH1} \times g1(w1) + p_{deltaL1} \times (1 - g1(w1)) & TPL1 \leq maxL \leq TPH1 \\ p_{deltaL1} & maxL < TPL1 \end{cases}$$

$P_{deltaH1}$, $P_{deltaL1}$, TPH1, and TPL1 all are preset parameters. $P_{dcltaH1}$ may be set to 3.5, $P_{deltaL1}$ may be set to 4.0, TPH1 may be set to 0.6, and TPL1 may be set to 0.3.

Optionally, p may be alternatively adjusted based on maxL and the preset relationship:

$$p = \begin{cases} m\_p + p_{deltaH1} & maxL > TPH1 \\ p + p_{deltaH1} \times g1(w1) + p_{deltaL1} \times (1 - g1(w1)) & TPL1 \leq maxL \leq TPH1 \\ m\_p + p_{deltaL1} & maxL < TPL1 \end{cases}$$

a may be calculated based on the terminal display device information, the feature information of the image obtained from the metadata, and other curve parameters:

$$a = (MaxDisplay - MinDisplay) \div \left(\frac{p \times maxL}{(p - 1) \times maxL + 1}\right)^m$$

The peak luminance of the terminal display device is MaxDisplay, the valley luminance is MinDisplay, and the maximum value of the feature information of the image obtained from the metadata is maxL.

Step S504: Perform tone mapping on the to-be-displayed image based on the reference information and the corresponding terminal device information. In this embodiment of this application, in performing tone mapping on the to-be-displayed image based on the reference information and the terminal device information of a corresponding type, the reference display device size corresponds to the terminal display device size, the reference viewing distance corresponds to the user viewing distance, the reference viewing angle corresponds to the user viewing angle, the reference ambient light luminance corresponds to the ambient light luminance, and the reference display device resolution corresponds to the terminal display device resolution.

In this embodiment of this application, when tone mapping is performed on the image, other information such as the terminal display device size and the user viewing distance is also considered, thereby improving display adaptation effect.

In a possible embodiment, performing tone mapping on the to-be-displayed image based on the reference information and the terminal device information of the corresponding type includes: obtaining a tone mapping parameter based on the reference information and the terminal device information of the corresponding type; and performing tone mapping on the to-be-displayed image based on the tone mapping parameter.

In a possible embodiment, obtaining the tone mapping parameter based on the reference information and the terminal device information of the corresponding type includes: adjusting the initial tone mapping parameter of the to-be-displayed image based on the reference information and the terminal device information of the corresponding type, to obtain the tone mapping parameter.

In this embodiment of this application, adjusting the initial tone mapping parameter of the to-be-displayed image based on the reference information and the terminal device information of the corresponding type, to obtain the adjusted tone mapping parameter includes: when a relationship between the reference information and the terminal device information meets different conditions, adjusting the initial tone mapping parameter of the to-be-displayed image in different manners, to obtain the adjusted tone mapping parameter.

In a possible embodiment, adjusting the initial tone mapping parameter of the to-be-displayed image based on the reference information and the terminal device information of the corresponding type, to obtain the tone mapping parameter includes: when the relationship between the reference information and the terminal device information meets a first condition, adjusting the initial tone mapping parameter of the to-be-displayed image in a first manner, to obtain the tone mapping parameter; and when the relationship between the reference information and the terminal device information of the corresponding type meets a second condition, adjusting the initial tone mapping parameter of the to-be-displayed image in a second manner, to obtain the tone mapping parameter. The initial tone mapping parameter represents an initial tone mapping curve, and the tone mapping parameter represents an adjusted tone mapping curve.

Optionally, the first condition includes at least one of the following: the terminal display screen size is smaller than the reference display device size, the user viewing distance is greater than the reference viewing distance, the user viewing angle deviates from the reference viewing angle, the ambient light luminance is greater than the reference ambient light luminance, or the terminal display device resolution is less than the reference display device resolution. It should be understood that, when the relationship between the reference information and the terminal device information meets the first condition, the initial tone mapping parameter needs to be adjusted, so that overall luminance of an image obtained through tone mapping based on the adjusted tone mapping parameter is improved, and higher detail definition is achieved, for example, local contrast is improved, edge sharpness is enhanced, more high-frequency components are reserved, or a pixel gradient is improved. Therefore, user perception is more consistent and user experience is improved.

When the relationship between the reference information and the terminal device information meets the first condition, there are three manners of adjusting the initial tone mapping parameter of the to-be-displayed image in the first manner: a manner 1, manner 2, and manner 3. In this application, one or more of the manner 1, the manner 2, and the manner 3 may be selected to perform. This is not limited in this application. In addition, when a plurality of manners are performed, a sequence of performing different manners is not limited in this application. A specific adjustment manner includes:

Manner 1: Adjust the initial tone mapping parameter, so that an obtained mapped value that is of the adjusted tone mapping curve and that is at the one or more first luminance feature values is greater than a mapped value that is of the initial tone mapping curve and that is at the one or more first luminance feature values.

In this embodiment of this application, the one or more first luminance feature values of the to-be-displayed image first need to be obtained. Optionally, the one or more first luminance feature values may be an average value of luminance of an entire frame of the to-be-displayed image, may be an average value of luminance of one or more areas of interest of the to-be-displayed image, may be a weighted average value of luminance of a plurality of areas of the to-be-displayed image, or may be an average value of one or more luminance ranges in a plurality of luminance ranges obtained by splitting a luminance histogram of the to-be-displayed image. This is not limited in this application. The one or more areas of interest of the to-be-displayed image may be selected from feature areas of the to-be-displayed image, for example, a face, a green plant, a red flag, an area with high complexity, an area with obvious noise, and a non-flat area. A method for selecting a feature area is not limited in this application. Optionally, a method for selecting an area may be obtaining from the metadata, may be obtaining according to a preset rule, or may be directly obtaining based on a feature of the to-be-displayed image. Optionally, a manner of calculating the average value may be calculating an arithmetic average value, a geometric average value, or the like. This is not limited in this application.

For example, the average value of the luminance of the entire frame of the to-be-displayed image may be selected as the first luminance feature value, and a calculation formula is as follows:

$$L_{avg} = \sum_{m=1,n=1}^{width,height} \left( L_{n,m} \right) \Big/ (width \times height)$$

$L_{avg}$ is the average value of the luminance of the entire frame of the to-be-displayed image, $L_{n,m}$ is any luminance value of the luminance of the entire frame of the to-be-displayed image, width and height are a width and a height of the to-be-displayed image, and n and m are respectively pixel indexes in a width direction and a height direction of the to-be-displayed image. $L_{n,m}$ may be R, G, or B in the RGB color gamut, or a maximum value max(R, G, B) in R, G, and B, or luminance Y in the YUV color gamut, or a luminance component L in the Lab color gamut. L and L' may be normalized optical signals or electrical signals. This is not limited in the present invention.

Then, the initial tone mapping parameter is adjusted, so that the obtained mapped value that is of the adjusted tone mapping curve and that is at the one or more first luminance feature values is greater than the mapped value that is of the initial tone mapping curve and that is at the one or more first luminance feature values.

In a possible embodiment, a process of adjusting the initial tone mapping parameter is: first obtaining the mapped value that is of the initial tone mapping curve and that is at the one or more first luminance feature values. For example, when the initial tone mapping curve is LY=h(L), L may be R, G, or B in the RGB color gamut, or a maximum value max(R, G, B) in R, G, and B, or luminance Y in the YUV color gamut, or a luminance component L in the Lab color gamut. L and L' may be normalized optical signals or electrical signals. This is not limited in the present invention. LY is a mapped value obtained through mapping on L based on the tone mapping curve, and a mapped value that is of the curve and that is at an average value $L_{avg}$ of the luminance of the entire frame of the to-be-displayed image is $LY_{avg}$=h($L_{avg}$). Optionally, one or more parameters may be directly adjusted to increase the mapped value that is of the adjusted tone mapping curve and that is at the one or more first luminance feature values.

Optionally, a new mapped value at the one or more first luminance feature values may be further obtained according to a preset algorithm based on the reference information and the terminal display device information, and the adjusted tone mapping parameter is obtained based on the obtained one or more new mapped values. Optionally, the preset algorithm may be a preset prior function, and a gain coefficient P corresponding to the reference information and the terminal display device information may be obtained based on the preset prior function. In this case, the new mapped value $LYN_{avg}$=P*$LY_{avg}$. Optionally, in a form of the preset prior function, the gain coefficient P may be obtained from a preset lookup table based on the reference information and the terminal display device information.

Optionally, an equation or an equation set of the tone mapping parameter may be established based on the one or more new mapped values, to obtain one or more parameters of the adjusted tone mapping curve, so as to obtain all parameters of the adjusted tone mapping curve in combination with other preset parameters. Optionally, establishing the equation or the equation set of the tone mapping curve based on the one or more new mapped values may be based on a tone mapping curve function, for example, when the initial tone mapping curve function is LY=h(L), the equation is $LYN_{avg}$=h($L_{avg}$); or may be based on an inverse tone mapping curve function, for example, when the inverse initial tone mapping curve function is $L=h^{-1}(LY)$, the equation is $L_{avg}=h^{-1}(LYN_{avg})$. Optionally, one or more parameters may be alternatively directly adjusted, so that the mapped value that is of the adjusted tone mapping curve and that is at the one or more first luminance feature values is the one or more new mapped values.

For example, for the tone mapping curve adjusted in the manner 1 and the initial tone mapping curve, refer to FIG. 6. FIG. 6 is an example diagram of an initial tone mapping parameter adjustment manner according to an embodiment of this application. An initial tone mapping curve represented by an initial tone mapping curve parameter is a curve 601. Average luminance 6 of an entire image is selected as a first luminance feature value. After the parameter is updated, an adjusted tone mapping curve is 602, and a mapped value that is of the adjusted tone mapping curve 602 and that is at the first luminance feature value 6 is greater than a mapped value that is of the initial tone mapping curve 601 and that is at the first luminance feature value 6. In addition, an overall mapped value of the adjusted tone mapping curve 602 is greater than that of the initial tone mapping curve 601. In this way, overall luminance of an image obtained through tone mapping based on the adjusted tone mapping parameter is improved, so that when a terminal display screen size is smaller than a reference display device size, a user viewing distance is greater than a reference viewing distance, a user viewing angle deviates from a reference viewing angle, ambient light luminance is greater than reference ambient light luminance, or the terminal display device resolution is less than the reference display device resolution, user perception is more consistent, and display adaptation effect is better.

Manner 2: Adjust the initial tone mapping parameter, so that an obtained slope that is of the adjusted tone mapping curve and that is at the one or more second luminance feature values is greater than a slope that is of the initial tone mapping curve and that is at the one or more second luminance feature values.

In this embodiment of this application, the one or more second luminance feature values of the to-be-displayed image first need to be obtained. A method for selecting the one or more second luminance feature values is similar to that for selecting the one or more first luminance feature values in the manner 1. Details are not described herein again. Optionally, the one or more second luminance feature values may be partially or completely the same as or may be completely different from the one or more first luminance feature values.

Then, the parameter of the initial tone mapping curve is adjusted, so that the slope that is of the adjusted tone mapping curve and that is at the one or more second luminance feature values is greater than the slope that is of the initial tone mapping curve and that is at the one or more second luminance feature values. Optionally, one or more parameters may be directly adjusted to increase the slope that is of the adjusted tone mapping curve and that is at the one or more second luminance feature values.

For example, first, a first-order derivative $d(LY)/dL=h'(L)$ is obtained based on an initial tone mapping curve function $LY=h(L)$. The curve parameter is $P_{curve}$, and a slope value corresponding to a second luminance feature value $L_{avg}$ is $LY'_{avg}=h'(L_{avg})$. Then, a new curve parameter $P1_{curve}$ at the second luminance feature value $L_{avg}$ is obtained according to a preset algorithm based on the reference information and the terminal display device information. The new curve parameter $P1_{curve}$ causes $h'(P1_{curve}, L_{avg})>h'(P_{curve}, L_{avg})$. In the preset algorithm, a curve parameter in $LY'_{avg}=h'(L_{avg})$ may be used as a variable, to analyze a relationship between a change of the curve parameter and $LY'_{avg}$, and an appropriate curve parameter is selected as the adjusted parameter $P_{curve}$.

For example, when the initial tone mapping curve is the following function curve:

$$L' = F(L) = a \times \left( \frac{p \times L^n}{(p-1) \times L^n + 1} \right)^m + b$$

L is luminance, L' is a mapped value obtained through mapping based on the tone mapping curve, a, p, m, n, and b are parameters of the tone mapping curve, and L may be R, G, or B in the RGB color gamut, or a maximum value max(R, G, B) in R, G, and B, or luminance Y in the YUV color gamut, or a luminance component L in the Lab color gamut. L and L' may be normalized optical signals or electrical signals. This is not limited in the present invention.

The slope value may be increased by reducing p and increasing a based on the current values of the curve parameters p and a, to obtain the adjusted tone mapping parameter.

Optionally, a new slope at the one or more first luminance feature values may be obtained according to the preset algorithm based on the reference information and the terminal display device information; an equation or an equation set of the tone mapping curve parameters is established based on one or more new slopes, and one or more parameters of the adjusted tone mapping curve are obtained through solving, to obtain all parameters of the adjusted tone mapping curve in combination with other preset parameters. Optionally, the preset algorithm may be a preset prior function, and a gain coefficient Q corresponding to the reference information and the terminal display device information may be obtained based on the preset prior function. In this case, the new slope $LYN'_{avg}=Q*LY'_{avg}$. Optionally, in a form of the preset prior function, the gain coefficient Q may be obtained from a preset lookup table based on the reference information and the terminal display device information. For example, when the initial tone mapping curve function is $LY=h(L)$, the first-order derivative is $d(LY)/dL=h'(L)$, and the equation is $LYN'_{avg}=h'(L_{avg})$. Alternatively, an equation or an equation set may be obtained based on an inverse function of the first-order derivative of the tone mapping curve function. This is not limited herein. Optionally, one or more parameters may be alternatively directly adjusted, so that the slope that is of the adjusted tone mapping curve and that is at the one or more first luminance feature values is the one or more new slopes.

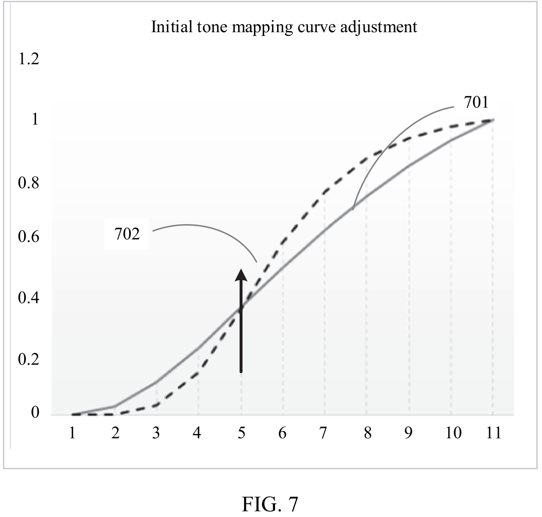

For example, for the tone mapping curve adjusted in the manner 2 and the initial tone mapping curve, refer to FIG. 7. FIG. 7 is an example diagram of an initial tone mapping parameter adjustment manner according to an embodiment of this application. An initial tone mapping curve is a curve 701. Average luminance 5 of an entire image is selected as a second luminance feature value. After the parameter is updated, an adjusted tone mapping curve is 702, and a slope that is of the adjusted tone mapping curve 702 and that is at the second luminance feature value 5 is greater than a slope that is of the initial tone mapping curve 701 and that is at the second luminance feature value 5. In addition, slopes of a plurality of segments of the adjusted tone mapping curve 702 is greater than an overall slope of the initial tone mapping curve 701. In this way, overall contrast of an image obtained through tone mapping based on the adjusted tone mapping parameter is improved, and a pixel gradient thereof is improved, thereby achieving higher detail definition, so that when a terminal display screen size is smaller than a reference display device size, a user viewing distance is greater than a reference viewing distance, a user viewing angle deviates from a reference viewing angle, ambient light luminance is greater than reference ambient light luminance, or the terminal display device resolution is less than the reference display device resolution, user perception is more consistent, display adaptation effect is better, and in particular, display effect of the complex image is improved.

Manner 3: Obtain a base layer and one or more enhancement layers of the to-be-displayed image, where a value obtained through mapping on a first feature value of any enhancement layer in the one or more enhancement layers based on the initial tone mapping curve of the any enhancement layer is a second feature value; and adjust the initial tone mapping curve of the any enhancement layer, so that an absolute value of a value obtained through mapping on the first feature value based on the adjusted tone mapping curve is greater than an absolute value of the second feature value.

In this embodiment, the first feature value and the second feature value may be positive values or negative values. When the value obtained through mapping on the first feature value based on the adjusted tone mapping curve is compared with the second feature value, the absolute values of the two values are compared.

In this embodiment of this application, the base layer and the one or more enhancement layers of the to-be-displayed image are first obtained. Optionally, the enhancement layers include at least one of an edge layer or a texture layer. Optionally, the base layer and the one or more enhancement layers may be obtained through filtering by a filter, or the base layer and the one or more enhancement layers may be obtained by combining image splitting and filtering. Optionally, the filter may be a bilateral filter, a multilateral filter, or the like. This is not limited in this application. Any value of the any enhancement layer in the one or more enhancement layers is the first feature value, and the value obtained through mapping on the first feature value based on the initial tone mapping curve of the any enhancement layer is the second feature value.

Then, the initial tone mapping parameter of the any enhancement layer is adjusted, so that the absolute value of the value obtained through mapping on the first feature value based on the adjusted tone mapping curve is greater than the absolute value of the second feature value. Optionally, the value obtained through mapping based on the adjusted tone mapping curve may be increased to N times the second feature value, where N is an integer, a fraction, or a decimal greater than 1. This is not limited in this application.

For example, the image is filtered by a spatial filter, a temporal filter, or a combination thereof, to extract data of different layers of the image.

Any luminance value L1[m] of the base layer L1 may be:

$$\text{L1[m]} = \sum_{n=1}^{filterL}(\text{filter[n]} * \text{L}[m - filterL/2]) \Big/ \Big(\sum_{m=1}^{filterL} \text{filter[n]}\Big).$$

L is a luminance value of an original image, filter[n] is a filtering coefficient at any position of the filter, and filterL is a length of the filter.

Any luminance value L2[m] (the first feature value) in an enhancement layer L2 may be:

$$\text{L2[m]} = \text{L[m]} – \text{L1[m]}.$$

L is the luminance value of the original image, and L may be R, G, or B in the RGB color gamut, or a maximum value max(R, G, B) in R, G, and B, or luminance Y in the YUV color gamut, or a luminance component L in the Lab color gamut.

Then, tone mapping curves respectively used by a plurality of layers are obtained based on preset information or tone mapping parameter information transferred by the metadata, and tone mapping is separately performed on each layer.

For example, if a tone mapping curve obtained for the base layer is g(), any mapped value of the base layer L1 obtained through mapping is L1'[m]:

$$L1`[m]=g(L1[m]).$$

Before adjustment, for a tone mapping curve f() obtained for an enhancement layer, any mapped value of the enhancement layer L2 obtained through mapping is L2'[m] (the second feature value):

$$L2`[m]=f(L2[m]).$$

When the mapped value is increased by N times, L2'[m] is increased by N times to L2"[m], where N is an integer or a fraction greater than 1:

L2"[m]=N*L2'[m]. A final mapped value L'[m] of the image is obtained by mixing, based on a gain coefficient gain [n] that is preset or sent with the metadata, the mapped value L1'[m] of the base layer obtained through tone mapping and the enhancement layer L2"[m] obtained through tone mapping:

$$L`[m]=gain[1]*L1`[m]+gain[2]*L2``[m]=gain[1]*L1`[m]+gain[1]*N*L2`[m].$$

The mapped value of the enhancement layer in the final mapped value of the image is N times greater than that obtained before adjustment. Luminance of the enhancement layer in the image is improved, thereby improving the local contrast and detail definition of the image, and improving the user viewing experience.

Optionally, when L is R, G, and B in the RGB color gamut, Ll' corresponds to RP[0], GP[0], and BP[0], and L2'' corresponds to RP[1], GP[1], and BP[1].

Finally, for a plurality of layers, RP[n], GP[n], and BP[n] are combined with the gain coefficient gain[n] that is preset or sent with the metadata to obtain final mapped values Rtm, Gtm, and Btm. n indicates indexes of the plurality of layers.

$$Rtm=\sum RP[n]*gain[n];$$

$$Gtm=\sum GP[n]*gain[n];$$

and

$$Btm=\sum BP[n]*gain[n].$$

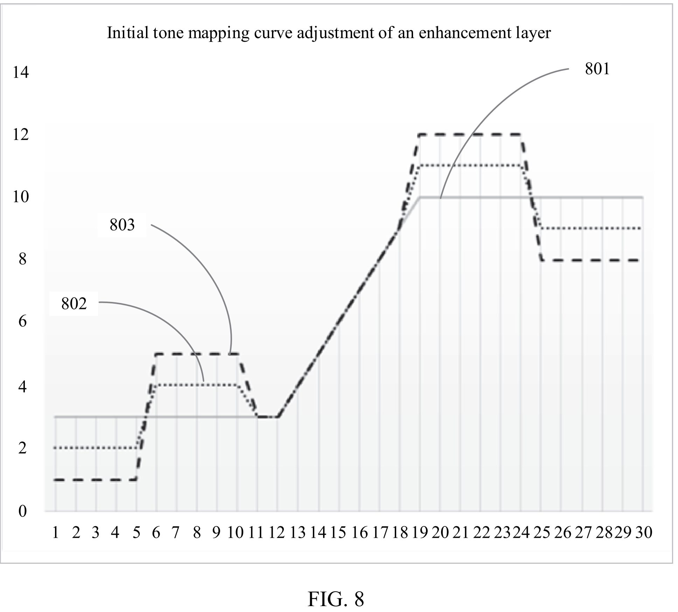

For example, for the tone mapping curve of the enhancement layer adjusted in the manner 3 and the initial tone mapping curve, refer to FIG. 8. FIG. 8 is an example diagram of an initial tone mapping parameter adjustment manner of an enhancement layer according to an embodiment of this application. A tone mapping curve of a base layer is 801, and an initial tone mapping curve of an enhancement layer is a curve 802. A parameter is adjusted to increase a mapped value of the curve 802 to two times, and an obtained adjusted tone mapping curve of the enhancement layer is 803. Compared with that of the curve 802, an overall mapped value of the curve 803 is increased to two times. Therefore, for an image obtained through mixing the base layer with the enhancement layer tone-mapped based on an adjusted tone mapping parameter of the enhancement layer, more high-frequency components are reserved, a feature of the enhancement layer is more obvious, and local contrast is improved, thereby achieving higher detail definition. For example, when the enhancement layer is an edge layer, edge sharpness is enhanced; and when the enhancement layer is a texture layer, texture details are clearer. Therefore, when a terminal display screen size is smaller than a reference display device size, a user viewing distance is greater than a reference viewing distance, a user viewing angle deviates from a reference viewing angle, ambient light luminance is greater than reference ambient light luminance, or the terminal display device resolution is less than the reference display device resolution, user perception is more consistent, display adaptation effect is better, and in particular, display effect of the complex image is improved.

In a possible embodiment, adjusting the initial tone mapping parameter of the to-be-displayed image based on the reference information and the terminal device information of the corresponding type, to obtain the tone mapping parameter includes: when the relationship between the reference information and the terminal device information meets a second condition, adjusting the initial tone mapping parameter of the to-be-displayed image in a second manner, to obtain the tone mapping parameter. The initial tone mapping parameter represents an initial tone mapping curve, and the tone mapping parameter represents an adjusted tone mapping curve.

Optionally, the second condition includes at least one of the following: the terminal display screen size is larger than the reference display device size, the user viewing distance is less than the reference viewing distance, the ambient light luminance is less than the reference ambient light luminance, or the terminal display device resolution is greater than the reference display device resolution. It should be understood that, when the relationship between the reference information and the terminal device information meets the second condition, the initial tone mapping curve parameter needs to be adjusted, so that average luminance of an image obtained through tone mapping based on the adjusted tone mapping curve parameter is reduced, or a dark portion is further darkened. Therefore, user perception is more consistent and user experience is improved.

When the relationship between the reference information and the terminal device information of the corresponding type meets the second condition, there are three manners of adjusting the initial tone mapping parameter of the to-be-displayed image in the second manner: a manner 4, manner 5, and manner 6. In this application, one or more of the manner 4, the manner 5, and the manner 6 may be selected to perform. This is not limited in this application. In addition, when a plurality of manners are performed, a sequence of performing different manners is not limited in this application. A specific adjustment manner includes:

Manner 4: Adjust the initial tone mapping parameter, so that an obtained mapped value that is of the adjusted tone mapping curve and that is at the one or more third luminance feature values is greater than a mapped value that is of the initial tone mapping curve and that is at the one or more third luminance feature values.

In this embodiment of this application, the one or more third luminance feature values of the to-be-displayed image first need to be obtained. A method for selecting the one or more third luminance feature values is similar to that for selecting the one or more first luminance feature values in the manner 1. Details are not described herein again.

Then, the parameter of the initial tone mapping curve is adjusted, so that the obtained mapped value that is of the adjusted tone mapping curve and that is at the one or more third luminance feature values is greater than the mapped value that is of the initial tone mapping curve and that is at the one or more third luminance feature values.

In a possible embodiment, a process of adjusting the initial tone mapping parameter is: first obtaining the mapped value that is of the initial tone mapping curve and that is at the one or more first luminance feature values. For example, when an initial tone mapping curve function is LY=h(L), a mapped value that is of the curve and that is at an average value $L_{avg}$ of the luminance of the entire frame of the to-be-displayed image is $LY_{avg}=h(L_{avg})$. Optionally, one or more parameters may be directly adjusted to reduce the mapped value that is of the adjusted tone mapping curve and that is at the one or more third luminance feature values.

Optionally, a new mapped value at the one or more first luminance feature values may be further obtained according to a preset algorithm based on the reference information and the terminal display device information, and the parameter of the adjusted tone mapping curve is obtained based on the obtained one or more new mapped values. Optionally, the preset algorithm may be a preset prior function, and an attenuation coefficient U corresponding to the reference information and the terminal display device information may be obtained based on the preset prior function. In this case, the new mapped value $LYN_{avg}=U*LY_{avg}$. Optionally, in a form of the preset prior function, the attenuation coefficient U may be obtained from a preset lookup table based on the reference information and the terminal display device information.

Optionally, an equation or an equation set of the parameter of the tone mapping curve may be established based on the one or more new mapped values, to obtain one or more parameters of the adjusted tone mapping curve, so as to obtain all parameters of the adjusted tone mapping curve in combination with other preset parameters. Optionally, establishing the equation or the equation set of the tone mapping curve parameter based on the one or more new mapped values may be based on a tone mapping curve, for example, when the initial tone mapping curve function is LY=h(L), the equation is $LYN_{avg}=h(L_{avg})$; or may be based on an inverse tone mapping curve function, for example, when the inverse initial tone mapping curve function is $L=h^{-1}(LY)$, the equation is $L_{avg}=h^{-1}(LYN_{avg})$. Optionally, one or more parameters may be alternatively directly adjusted, so that the mapped value that is of the adjusted tone mapping curve and that is at one or more first luminance feature values is the one or more new mapped values.

Optionally, the one or more third luminance feature values include one or more luminance feature values of the dark portion of the to-be-displayed image, or one or more luminance feature values of the entire to-be-displayed image. The dark portion may be a luminance range below 5 nits that is lower than minimum distinguishable luminance of human eyes, or may be a darker portion of the image obtained by splitting the image or splitting a luminance histogram. This is not limited in this application.

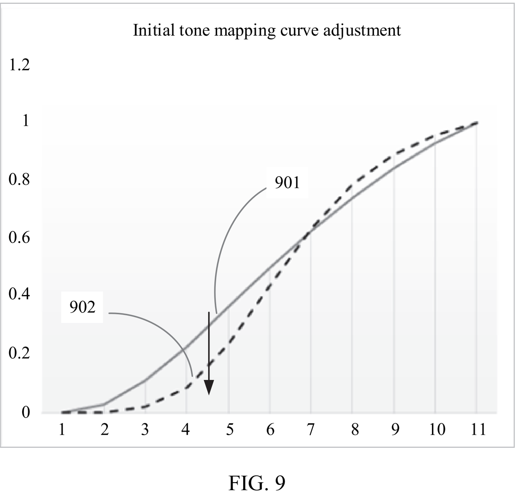

For example, when the third luminance feature value is an average luminance value of the dark portion of the image, for the tone mapping curve adjusted in the manner 4 and the initial tone mapping curve, refer to FIG. 9. FIG. 9 is an example diagram of an initial tone mapping parameter adjustment manner according to an embodiment of this application. An initial tone mapping curve represented by an initial tone mapping parameter is a curve 901. Average luminance 4.5 of a dark portion of an image is selected as a third luminance feature value. After the parameter is updated, an adjusted tone mapping curve is 902, and a mapped value that is of the adjusted tone mapping curve 902 and that is at the third luminance feature value 4.5 is less than a mapped value that is of the initial tone mapping curve 901 and that is at the third luminance feature value 4.5. In addition, an overall mapped value of the dark portion of the adjusted tone mapping curve 902 is less than that of the initial tone mapping curve 901. In this way, the dark portion of the image obtained through tone mapping based on the adjusted tone mapping parameter is darker. Because human eyes are more sensitive to the dark portion, when a terminal display screen size is greater than a reference display device size, a user viewing distance is less than a reference viewing distance, ambient light luminance is less than reference ambient light luminance, or the terminal display device resolution is greater than the reference display device resolution, human eyes may see noise of the dark portion. Therefore, the dark portion may be further darkened to adapt to a changing application scenario, so that user visual perception is more consistent, and image display adaptation effect and display effect are improved.

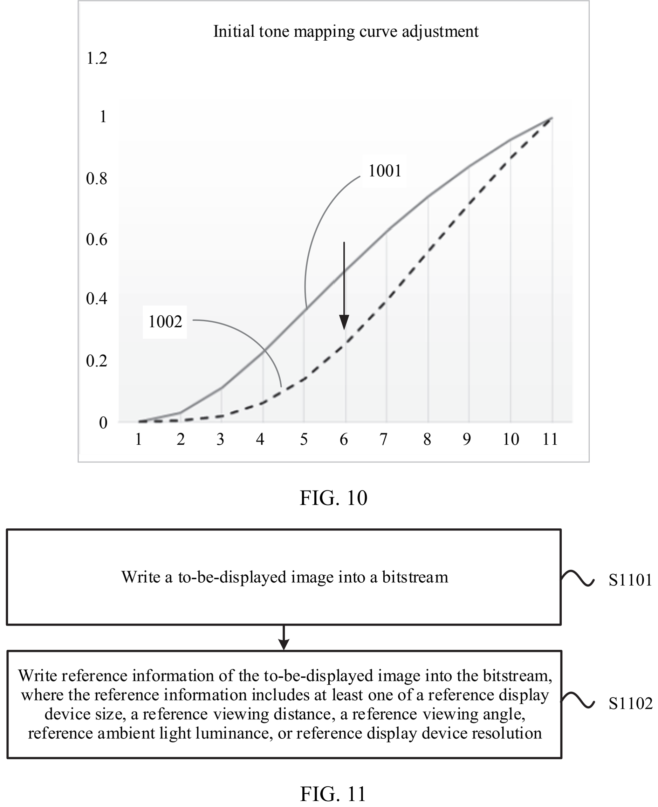

For example, when the third luminance feature value is an average luminance value of the entire image, for the tone mapping curve adjusted in the manner 4 and the initial tone mapping curve, refer to FIG. 10. FIG. 10 is an example diagram of an initial tone mapping parameter adjustment manner according to an embodiment of this application. An initial tone mapping curve is a curve 1001. Average luminance 6 of an entire image is selected as a third luminance feature value. After the parameter is updated, an adjusted tone mapping curve is 1002, and a mapped value of the adjusted tone mapping curve 1002 at the average luminance 6 is less than a mapped value of the initial tone mapping curve 1001 at the average luminance 6. In addition, an overall mapped value of the adjusted tone mapping curve 1002 is less than that of the initial tone mapping curve 1001. In this way, overall luminance of an image obtained through tone mapping based on the adjusted tone mapping parameter is reduced, so that when a terminal display screen size is greater than a reference display device size, a user viewing distance is less than a reference viewing distance, ambient light luminance is less than reference ambient light luminance, or the terminal display device resolution is greater than the reference display device resolution, visual perception of a user is more consistent, display adaptation effect is better, and eyes of the user can be protected to some extent.

Manner 5: Adjust the initial tone mapping parameter, so that an obtained slope that is of the adjusted tone mapping curve and that is at the one or more fourth luminance feature values is less than a slope that is of the initial tone mapping curve and that is at the one or more fourth luminance feature values.

In this embodiment of this application, the one or more fourth luminance feature values of the to-be-displayed image first need to be obtained. A method for selecting the one or more fourth luminance feature values is similar to that for selecting the one or more first luminance feature values in steps of the manner 1. Details are not described herein again. Optionally, the one or more fourth luminance feature values may be partially or completely the same as or may be completely different from the one or more third luminance feature values.

Then, the parameter of the initial tone mapping curve is adjusted, so that the slope that is of the adjusted tone mapping curve and that is at the one or more fourth luminance feature values is less than the slope that is of the initial tone mapping curve and that is at the one or more fourth luminance feature values. Optionally, one or more parameters may be directly adjusted to reduce the slope that is of the adjusted tone mapping curve and that is at the one or more fourth luminance feature values.

For example, first, a first-order derivative $d(LY)/dL=h'(L)$ is obtained based on an initial tone mapping curve function $LY=h(L)$. The curve parameter is $P_{curve}$, and a slope value corresponding to a second luminance feature value $L_{avg}$ is $LY'_{avg}=h'(L_{avg})$. Then, a new curve parameter $QI_{curve}$ at the second luminance feature value $L_{avg}$ is obtained according to a preset algorithm based on the reference information and the terminal display device information. The new curve parameter $P1_{curve}$ causes $h'(P1_{curve}, L_{avg})<h'(P_{curve}, L_{avg})$. In the preset algorithm, a curve parameter in $LY'_{avg}=h'(L_{avg})$ may be used as a variable, to analyze a relationship between a change of the curve parameter and $LY'_{avg}$, and an appropriate curve parameter is selected as the adjusted parameter $P_{curve}$.

For example, when the initial tone mapping curve is the following function curve:

$$\mathrm{L}' = F(L) = \mathrm{a} \times \left(\frac{p \times L^n}{(p-1) \times L^n + 1}\right)^m + \mathrm{b}$$

L is luminance, L' is a mapped value obtained through mapping based on the tone mapping curve, and a, p, m, n, and b are parameters of the tone mapping curve. L may be R, G, or B in the RGB color gamut, or a maximum value max(R, G, B) in R, G, and B, or luminance Y in the YUV color gamut, or a luminance component L in the Lab color gamut.

The slope value may be reduced by reducing a and increasing p based on the current values of the curve parameters p and a, to obtain the adjusted tone mapping curve parameter.

Optionally, a new slope at the one or more first luminance feature values may be obtained according to the preset algorithm based on the reference information and the terminal display device information; an equation or an equation set of the tone mapping curve parameters is established based on one or more new slopes, and one or more parameters of the adjusted tone mapping curve are obtained through solving, to obtain all parameters of the adjusted tone mapping curve in combination with other preset parameters. Optionally, the preset algorithm may be a preset prior function, and an attenuation coefficient V corresponding to the reference information and the terminal display device information may be obtained based on the preset prior function. In this case, the new slope $LYN'_{avg}=V*LY'_{avg}$. Optionally, in a form of the preset prior function, the attenuation coefficient V may be obtained from a preset lookup table based on the reference information and the terminal display device information. For example, when the initial tone mapping curve function is LY=h(L), the first-order derivative is d(LY)/dL=h'(L), and the equation is LYN'avg=h'($L_{avg}$). Alternatively, an equation or an equation set may be obtained based on an inverse function of the first-order derivative of the tone mapping curve function. This is not limited herein. Optionally, one or more parameters may be alternatively directly adjusted, so that the slope that is of the adjusted tone mapping curve and that is at the one or more first luminance feature values is the one or more new slopes.

In this embodiment of this application, overall contrast of an image obtained through tone mapping based on the adjusted tone mapping curve parameter is lowered, and a pixel gradient thereof is improved, thereby achieving lower detail definition, so that poor picture display due to excessively high contrast is prevented when a terminal display screen size is greater than a reference display device size, a user viewing distance is less than a reference viewing distance, ambient light luminance is less than reference ambient light luminance, or the terminal display device resolution is greater than the reference display device resolution, display adaptation effect and display effect of the complex image are improved.

Manner 6: Obtain a base layer and one or more enhancement layers of the to-be-displayed image, where a value obtained through mapping on a third feature value of any enhancement layer in the one or more enhancement layers based on the initial tone mapping curve of the any enhancement layer is a fourth feature value; and adjust the initial tone mapping parameter of the any enhancement layer, so that an absolute value of a value obtained through mapping on the third feature value based on the adjusted tone mapping curve is less than an absolute value of the fourth feature value.

In this implementation, the third feature value and the fourth feature value may be positive values or negative values. When the value obtained through mapping on the third feature value based on the adjusted tone mapping curve is compared with the fourth feature value, the absolute values of the two values are compared.

In this embodiment of this application, the base layer and the one or more enhancement layers of the to-be-displayed image are first obtained. Optionally, the enhancement layers include at least one of an edge layer or a texture layer. Optionally, the base layer and the one or more enhancement layers may be obtained through filtering by a filter, or the base layer and the one or more enhancement layers may be obtained by combining image splitting and filtering. Optionally, the filter may be a bilateral filter, a multilateral filter, or the like. This is not limited in this application. Any value of the any enhancement layer in the one or more enhancement layers is the third feature value, and the value obtained through mapping on the third feature value based on the initial tone mapping curve of the any enhancement layer is the fourth feature value.

Then, the initial tone mapping parameter of the any enhancement layer is adjusted, so that the absolute value of the value obtained through mapping on the third feature value based on the adjusted tone mapping curve is greater than the absolute value of the fourth feature value.

The value obtained through mapping based on the adjusted tone mapping curve may be reduced to M times the fourth feature value, where M is a fraction or a decimal greater than 0 and less than 1. This is not limited in this application.

For example, the image is filtered by a spatial filter, a temporal filter, or a combination thereof, to extract data of different layers of the image.

Any luminance value L1[m] of the base layer L1 may be:

$$L1[m]= \sum_{n=1}^{filterL}(\text{filter}[n] * L[m - filterL/2])/\left(\sum_{m=1}^{filterL} \text{filter}[n]\right).$$

L is a luminance value of an original image, filter[n] is a filtering coefficient at any position of the filter, and filterL is a length of the filter.

Any luminance value L2[m] (the third feature value) in an enhancement layer L2 may be:

$$L2[m]=L[m]–L1[m].$$

L is the luminance value of the original image, and may be R, G, or B in the RGB color gamut, or a maximum value max(R, G, B) in R, G, and B, or luminance Y in the YUV color gamut, or a luminance component L in the Lab color gamut.

Then, tone mapping curves respectively used by a plurality of layers are obtained based on preset information or tone mapping parameter information transferred by the metadata, and tone mapping is separately performed on each layer.

For example, if a tone mapping curve obtained for the base layer is g(), any mapped value of the base layer L1 obtained through mapping is L1'[m]:

$$L1`[m]=g(L1[m]).$$

Before adjustment, for a tone mapping curve f() obtained for an enhancement layer, any mapped value of the enhancement layer L2 obtained through mapping is L2'[m] (the fourth feature value):

$$L2`[m]=f(L2[m]).$$

The mapped value is reduced by M times, and L2'[m] is reduced by M times to L2" [m], where M is an integer or a fraction greater than 0 and less than 1.

$$L2``[m]=M*L2`[m].$$

A final mapped value L' [m] of the image is obtained by mixing, based on a gain coefficient gain[n] that is preset or sent with the metadata, the mapped value L1'[m] of the base layer obtained through tone mapping and the enhancement layer L2"[m] obtained through tone mapping:

$$L`[m]=gain[1]*L1`[m]+gain[2]*L2``[m]=gain[1]*L1`[m]+gain[1]*M*L2`[m].$$

The mapped value of the enhancement layer in the final mapped value of the image is M times smaller than that before adjustment. Luminance of the enhancement layer in the image is reduced, thereby lowering local contrast and detail definition of the image, to prevent visual discomfort of the user due to excessively high contrast.

Optionally, when L is R, G, and B in the RGB color gamut, Ll' corresponds to RP[0], GP[0], and BP[0], and L2'' corresponds to RP[1], GP[1], and BP[1].

Finally, for a plurality of layers, RP[n], GP[n], and BP[n] are combined with the gain coefficient gain[n] that is preset or sent with the metadata to obtain final mapped values Rtm, Gtm, and Btm. n indicates indexes of the plurality of layers.

$$Rtm=\sum RP[n]*gain[n];$$

$$Gtm=\sum GP[n]*gain[n];$$

and

$$Btm=\sum BP[n]*gain[n].$$

In this embodiment of this application, for an image obtained through mixing the base layer with the enhancement layer tone-mapped based on an adjusted tone mapping curve parameter of the enhancement layer, the mapped value of the enhancement layer is reduced, a feature of the enhancement layer is weakened, fewer high-frequency components are reserved, and the local contrast is lowered, thereby lowering the detail definition. For example, when the enhancement layer is an edge layer, edge sharpness is weakened; and when the enhancement layer is a texture layer, texture details are weakened. Therefore, poor picture display and user discomfort due to excessively high contrast can be prevented when the terminal display screen size is smaller than the reference display device size, the user viewing distance is greater than the reference viewing distance, the user viewing angle deviates from the reference viewing angle, the ambient light luminance is greater than the reference ambient light luminance, or the terminal display device resolution is less than the reference display device resolution, so that display adaptation effect is better, in particular, display effect of the complex image is improved, and user viewing experience is improved.

In a possible embodiment, tone mapping is performed on the to-be-displayed image based on the parameter of the adjusted tone mapping curve, that is, the tone mapping parameter.

In this embodiment of this application, tone mapping is performed on the to-be-displayed image based on the adjusted tone mapping parameter. A method and a curve used in a tone mapping process are not limited in this application. Optionally, the method used in the tone mapping process may be global tone mapping or local tone mapping. This is not limited in this application.

For example, a reference tone mapping implementation is as follows:

First, a tone mapping coefficient lookup table lut is obtained based on the adjusted tone mapping parameter, where the lookup table lut is used to obtain a tone mapping coefficient Ratio.

Then, a luminance value lum of each pixel (R, G, B) is obtained, and the tone mapping coefficient Ratio corresponding to the luminance value lum is obtained from the lookup table lut. Ratio=lut[lum].

It should be noted that lum is not limited in this application, and other luminance such as R, G, or B in the RGB color gamut, or a luminance component L in the Lab color gamut, or I in the ICtCp format, or luminance Y in the YUV color gamut may be used for calculation.

When lum is calculated based on R, G, and B in the RGB color gamut, a method for calculating the luminance value lum of each pixel (R, G, B) is not limited in this application. For example, Lum=max(R, G, B) or Lum=a*R+b*G+c*B, where a, b, and c are weighting coefficients.

Finally, tone mapping is performed by multiplying each pixel (R, G, B) by the tone mapping coefficient Ratio. The pixel obtained through tone mapping is ($R_{TM}$, $G_{TM}$, $B_{TM}$):

$$R_{TM}=R*Ratio, \ G_{TM}=G*Ratio, \ and \ B_{TM}=B*Ratio.$$

Alternatively, [Y U V]=M*[R G B], YTM=Y*Ratio, and [R G B]=$M^{-1}$*[Y U V], where M is selected according to the BT.2020 standard or the BT.709 standard.

Optionally, when tone mapping is performed on the to-be-displayed image based on the reference information and the terminal device information of the corresponding type, the reference information and the terminal device information of the corresponding type may be input into an AI neural network, and the AI neural network outputs an image obtained through tone mapping on the to-be-displayed image.

Optionally, saturation of each pixel (R, G, B) in the image obtained through tone mapping may be adjusted. It should be understood that the metadata may include color attribute information (for example, color saturation adjustment intensity) of at least one frame of image. Color information of the at least one frame of image obtained through mapping may be corrected based on the color attribute information and luminance information of each pixel in the to-be-displayed image obtained before and after tone mapping.

For example, a pixel A in the to-be-displayed image is used as an example. A ratio of a first luminance value obtained through tone mapping on the pixel A to a second luminance value obtained before tone mapping of the pixel A can be determined. A saturation adjustment factor is determined based on the ratio, a maximum display capability of a terminal display device, a maximum display capability of a reference display device (for example, a video production device) in the front-end device, color attribute information of at least one frame of image, and a second luminance value before tone mapping of the pixel A. Color information of the pixel A is adjusted based on the saturation adjustment factor. The maximum display capability may be understood as a maximum display luminance value.

It should be understood that the color information may be a YUV signal or a color signal in another color gamut. This is not specifically limited in this embodiment of this application. Y in "YUV" represents luminance information of an image, and UV represents color information of the image.

In a possible implementation, the color information is a YUV signal, and the color information may be corrected by multiplying the saturation adjustment factor by a UV component of each pixel in the at least one frame of image obtained through tone mapping.

For example, this saturation adjustment process may be:

ratioc for color adjustment is obtained based on the luminance value lum of each pixel and the tone mapping coefficient Ratio, where ratioc may be ratioc=$(ratio)^N$, or the like.

[Y U V]=M*[R G B], UTM=U*ratioc, and VTM=V*ratioc, where M is selected according to the BT.2020 standard or the BT.709 standard.

It should be noted that the present invention does not limit the saturation adjustment algorithm, which is also referred to as a color adjustment algorithm, and may be performed in different color gamuts, for example, RGB, IctCp, HSV, and Lab.

Optionally, color gamut mapping may be added after tone mapping or saturation adjustment, for conversion from a current color gamut to a target color gamut. The current color gamut and the target color gamut include but are not limited to color gamuts specified in the BT.2020 standard, the BT.709 standard, the DCI-P3 standard, and the Srgb standard.

With reference to specific accompanying drawings, the following describes a process of image encoding by a front-end device.

Refer to FIG. 11. FIG. 11 is a schematic flowchart of an image encoding method according to an embodiment of this application. The method may be performed by a front-end device, and specifically includes the following steps.

Step S1101: Write a to-be-displayed image into a bitstream.

It should be understood that the to-be-displayed image may be one or more frames of images. When the to-be-displayed image is a plurality of consecutive frames of images, the to-be-displayed image may be understood as a video. Optionally, the to-be-displayed image may be an HDR image or video, or may be an SDR image or video.

Step S1102: Write reference information of the to-be-displayed image into the bitstream, where the reference information includes at least one of a reference display device size, a reference viewing distance, a reference viewing angle, reference ambient light luminance, or reference display device resolution.

In this embodiment of this application, the reference information is the same as the reference information in step S502. Details are not described herein again. The reference information is for tone mapping on the to-be-displayed image.

An embodiment of this application provides a structure of a bitstream. The bitstream includes at least one of a reference display device size, a reference viewing distance, a reference viewing angle, reference ambient light luminance, or reference display device resolution.

Optionally, the method further includes: writing a reference tone mapping parameter of the to-be-displayed image into the bitstream, where the reference tone mapping parameter is for obtaining an initial tone mapping parameter. The reference information is used by a decoder to adjust the initial tone mapping parameter to obtain a tone mapping parameter, and the tone mapping parameter is for tone mapping on the to-be-displayed image.

Optionally, the writing reference information of the to-be-displayed image into the bitstream includes: writing the reference information into the bitstream; or writing an index of the reference information into the bitstream. The index of the reference information is the same as the index of the reference information in step S502. Details are not described herein again.

Optionally, the method further includes: writing one or more luminance feature values of the to-be-displayed image into the bitstream. The one or more luminance feature values are used by the decoder to adjust the initial tone mapping parameter to obtain the adjusted tone mapping parameter. The one or more luminance feature values are similar to the one or more first luminance feature values in the manner 1. Details are not described herein again.

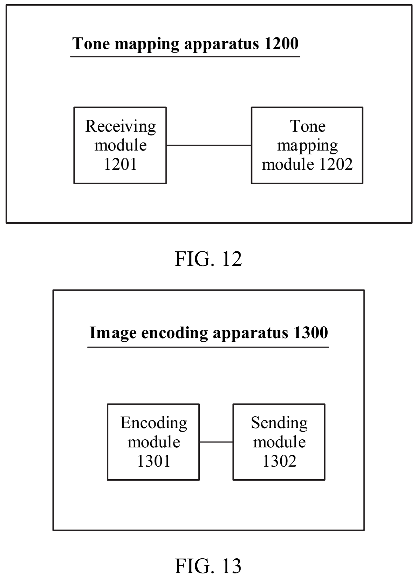

An embodiment of this application further provides a tone mapping apparatus 1200. Refer to FIG. 12. FIG. 12 is an example diagram of a tone mapping apparatus according to an embodiment of this application. 1200 has a function of implementing the terminal display device in FIG. 4A. The function, the unit, or the means may be implemented by using software, may be implemented by using hardware, or may be implemented by hardware executing corresponding software.

A receiving module 1201 is configured to: obtain a to-be-displayed image;

obtain reference information, where the reference information includes at least one of a reference display device size, a reference viewing distance, a reference viewing angle, reference ambient light luminance, or reference display device resolution; and

obtain terminal device information, where the terminal device information includes at least one of a terminal display device size, a user viewing distance, a user viewing angle, ambient light luminance, or terminal display device resolution.

A tone mapping module 1202 is configured to perform tone mapping on the to-be-displayed image based on the reference information and the terminal device information of a corresponding type.

In this embodiment of this application, in performing tone mapping on the to-be-displayed image based on the reference information and the terminal device information of a corresponding type, the reference display device size corresponds to the terminal display device size, the reference viewing distance corresponds to the user viewing distance, the reference viewing angle corresponds to the user viewing angle, the reference ambient light luminance corresponds to the ambient light luminance, and the reference display device resolution corresponds to the terminal display device resolution.

In a possible embodiment, performing tone mapping on the to-be-displayed image based on the reference information and the terminal device information of the corresponding type includes: obtaining a tone mapping parameter based on the reference information and the terminal device information of the corresponding type; and performing tone mapping on the to-be-displayed image based on the tone mapping parameter.

In a possible embodiment, obtaining the tone mapping parameter based on the reference information and the terminal device information of the corresponding type includes: adjusting the initial tone mapping parameter of the to-be-displayed image based on the reference information and the terminal device information of the corresponding type, to obtain the tone mapping parameter.

In a possible embodiment, adjusting the initial tone mapping parameter of the to-be-displayed image based on the reference information and the terminal device information of the corresponding type, to obtain the tone mapping parameter includes: when a relationship between the reference information and the terminal device information meets a first condition, adjusting the initial tone mapping parameter of the to-be-displayed image in a first manner, to obtain the adjusted tone mapping parameter. The initial tone mapping parameter represents an initial tone mapping curve, and the tone mapping parameter represents an adjusted tone mapping curve.

In a possible embodiment, the first condition includes at least one of the following: the terminal display screen size is smaller than the reference display device size, the user viewing distance is greater than the reference viewing distance, the user viewing angle deviates from the reference viewing angle, the ambient light luminance is greater than the reference ambient light luminance, or the terminal display device resolution is less than the reference display device resolution.

In a possible embodiment, adjusting the initial tone mapping parameter of the to-be-displayed image in the first manner includes: obtaining one or more first luminance feature values of the to-be-displayed image; and adjusting the initial tone mapping parameter, so that an obtained mapped value that is of the adjusted tone mapping curve and that is at the one or more first luminance feature values is greater than a mapped value that is of the initial tone mapping curve and that is at the one or more first luminance feature values.

In a possible embodiment, adjusting the initial tone mapping curve of the to-be-displayed image in the first manner further includes: obtaining one or more second luminance feature values of the to-be-displayed image; and adjusting the initial tone mapping curve, so that an obtained slope that is of the adjusted tone mapping curve and that is at the one or more second luminance feature values is greater than a slope that is of the initial tone mapping curve and that is at the one or more second luminance feature values.

In a possible embodiment, adjusting the initial tone mapping parameter of the to-be-displayed image in the first manner further includes: obtaining a base layer and one or more enhancement layers of the to-be-displayed image, where a value obtained through mapping on a first feature value of any enhancement layer in the one or more enhancement layers based on the initial tone mapping curve of the any enhancement layer is a second feature value; and adjusting the initial tone mapping parameter of the any enhancement layer, so that an absolute value of a value obtained through mapping on the first feature value based on the adjusted tone mapping curve is greater than an absolute value of the second feature value.

In this embodiment, the first feature value and the second feature value may be positive values or negative values. When the value obtained through mapping on the first feature value based on the adjusted tone mapping curve is compared with the second feature value, the absolute values of the two values are compared.

In a possible embodiment, adjusting the initial tone mapping parameter of the to-be-displayed image based on the reference information and the terminal device information of the corresponding type, to obtain the tone mapping parameter includes: when a relationship between the reference information and the terminal device information meets a second condition, adjusting the initial tone mapping parameter of the to-be-displayed image in a second manner, to obtain the tone mapping parameter. The initial tone mapping parameter represents an initial tone mapping curve, and the tone mapping parameter represents an adjusted tone mapping curve.

In a possible embodiment, the second condition includes at least one of the following: the terminal display screen size is larger than the reference display device size, the user viewing distance is less than the reference viewing distance, the ambient light luminance is less than the reference ambient light luminance, or the terminal display device resolution is greater than the reference display device resolution.

In a possible embodiment, adjusting the initial tone mapping parameter of the to-be-displayed image in the second manner includes: obtaining one or more third luminance feature values of the to-be-displayed image; and adjusting the initial tone mapping parameter, so that an obtained mapped value that is of the adjusted tone mapping curve and that is at the one or more third luminance feature values is less than a mapped value that is of the initial tone mapping curve and that is at the one or more third luminance feature values.

In a possible embodiment, the one or more third luminance feature values include one or more luminance feature values of a dark portion of the to-be-displayed image.

In a possible embodiment, adjusting the initial tone mapping parameter of the to-be-displayed image in the second manner further includes: obtaining one or more fourth luminance feature values of the to-be-displayed image; and adjusting the initial tone mapping parameter, so that an obtained slope that is of the adjusted tone mapping curve and that is at the one or more fourth luminance feature values is less than a slope that is of the initial tone mapping curve and that is at the one or more fourth luminance feature values.

In a possible embodiment, adjusting the initial tone mapping parameter of the to-be-displayed image in the second manner further includes: obtaining a base layer and one or more enhancement layers of the to-be-displayed image, where a value obtained through mapping on a third feature value of any enhancement layer in the one or more enhancement layers based on the initial tone mapping curve of the any enhancement layer is a fourth feature value; and adjusting the initial tone mapping parameter of the any enhancement layer, so that an absolute value of a value obtained through mapping on the third feature value based on the adjusted tone mapping curve is less than an absolute value of the fourth feature value.

In this implementation, the third feature value and the fourth feature value may be positive values or negative values. When the value obtained through mapping on the third feature value based on the adjusted tone mapping curve is compared with the fourth feature value, the absolute values of the two values are compared.

In a possible embodiment, the tone mapping module is further configured to: obtain reference tone mapping of the to-be-displayed image; obtain a terminal display device display capability in the terminal device information; and adjust the reference tone mapping parameter of the to-be-displayed image based on the reference tone mapping parameter and the terminal display device display capability, to obtain the initial tone mapping parameter.

In a possible embodiment, obtaining the reference information includes: obtaining the reference information from metadata of the to-be-displayed image; obtaining an index of the reference information from the metadata, and selecting the reference information from a plurality of pieces of preset reference information based on the index; or using preset reference information as the reference information.

In a possible embodiment, obtaining the terminal device information includes: obtaining the terminal device information through measurement; selecting the terminal device information from a plurality of pieces of preset terminal information based on a preset index; or using preset terminal device information as the terminal device information.

It should be understood that the third aspect corresponds to the technical solution in the first aspect. Therefore, beneficial effect obtained in the possible implementations is similar, and details are not described herein again.

It should be understood that all related content of the steps in the foregoing embodiment of the tone mapping method may be cited in function descriptions of corresponding function modules, and details are not described herein again.

An embodiment of this application further provides an image encoding apparatus 1300. Refer to FIG. 13. FIG. 13 is an example diagram of an image encoding apparatus according to an embodiment of this application. The apparatus 1300 has a function of implementing the front-end device in FIG. 4A. For example, the function, the unit, or the means may be implemented by using software, may be implemented by using hardware, or may be implemented by hardware executing corresponding software.

For example, refer to FIG. 13. The apparatus 1300 may include:

an encoding module 1301, configured to: write a to-be-displayed image into a bitstream; and write reference information of the to-be-displayed image into the bitstream, where the reference information includes at least one of a reference display device size, a reference viewing distance, a reference viewing angle, reference ambient light luminance, or reference display device resolution; and the reference information is for tone mapping on the to-be-displayed image; and
a sending module 1302, configured to send the bitstream.

In a possible embodiment, the encoding module is further configured to: write a reference tone mapping parameter of the to-be-displayed image into the bitstream. The reference tone mapping parameter is for obtaining an initial tone mapping parameter, the reference information is used by the decoder to adjust the initial tone mapping parameter to obtain a tone mapping parameter, and the tone mapping parameter is for tone mapping on the to-be-displayed image.

In a possible embodiment, writing the reference information of the to-be-displayed image into the bitstream includes: writing the reference information into the bitstream; or writing an index of the reference information into the bitstream.

In a possible embodiment, the encoding module is further configured to: write one or more luminance feature values of the to-be-displayed image into the bitstream. The one or more luminance feature values are used by the decoder to adjust the initial tone mapping parameter to obtain the tone mapping parameter.

It should be understood that all related content of the steps in the foregoing image encoding method embodiments may be cited as function descriptions of corresponding functional modules. Details are not described herein again.

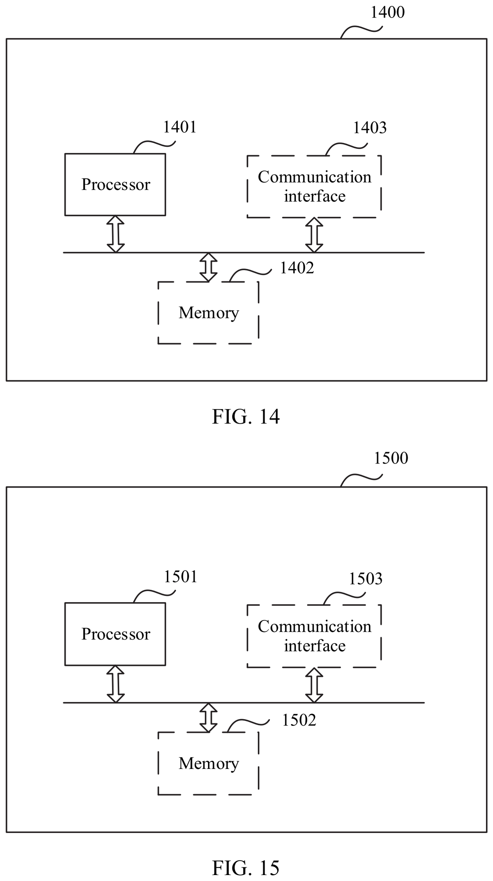

An embodiment of this application further provides an electronic device 1400. Refer to FIG. 14. FIG. 14 is an example diagram of an electronic device according to an embodiment of this application. The electronic device is configured to implement the tone mapping method in the embodiment shown in FIG. 5.

As shown in FIG. 14, the electronic device 1400 may include a processor 1401, configured to execute a program or instructions stored in a memory 1402. When the program or the instructions stored in the memory 1402 are executed, the processor is configured to perform the tone mapping method in the embodiment shown in FIG. 5.

Optionally, the electronic device 1400 may further include a communication interface 1403. FIG. 14 shows, with dashed lines, that the communication interface 1403 is optional for the electronic device 1400.

A quantity of processors 1401, a quantity of memories 1402, and a quantity of communication interfaces 1403 do not constitute limitations on embodiments of this application, and during specific implementation, may be randomly configured based on a service requirement.

Optionally, the memory 1402 is located outside the electronic device 1400.

Optionally, the electronic device 1400 includes the memory 1402. The memory 1402 is connected to the at least one processor 1401, and the memory 1402 stores the instructions that can be executed by the at least one processor 1401. FIG. 14 shows, with dashed lines, that the memory 142 is optional for the electronic device 1400.

The processor 1401 and the memory 1402 may be coupled through an interface circuit, or may be integrated together. This is not limited herein.

A specific connection medium between the processor 1401, the memory 1402, and the communication interface 1403 is not limited in this embodiment of this application. In this embodiment of this application, the processor 1401, the memory 1402, and the communication interface 1403 are connected to each other through a bus 1404 in FIG. 14. The bus is represented by a bold line in FIG. 14. A manner of connection between other components is merely an example for description, and specific connection is not limited thereto. The bus may be classified into an address bus, a data bus, a control bus, and the like. For ease of representation, only one bold line is used to represent the bus in FIG. 14, but this does not mean that there is only one bus or only one type of bus.

An embodiment of this application further provides an electronic device 1500. Refer to FIG. 15. FIG. 15 is an example diagram of an electronic device according to an embodiment of this application, and is configured to implement the image encoding method in the embodiment shown in FIG. 11.

As shown in FIG. 15, the electronic device 1500 may include a processor 1501, configured to execute a program or instructions stored in a memory 1502. When the program or the instructions stored in the memory 1502 are executed, the processor 1501 is configured to perform the image encoding method in the embodiment shown in FIG. 11.

Optionally, the electronic device 1500 may further include a communication interface 1503. FIG. 15 shows, with dashed lines, that the communication interface 1503 is optional for the electronic device 1500.

A quantity of processors 1501, a quantity of memories 1502, and a quantity of communication interfaces 1603 do not constitute limitations on embodiments of this application, and during specific implementation, may be randomly configured based on a service requirement.

Optionally, the memory 1502 is located outside the electronic device 1500.

Optionally, the electronic device 1500 includes the memory 1502. The memory 1502 is connected to the at least one processor 1501, and the memory 1502 stores the instructions that can be executed by the at least one processor 1501. FIG. 15 shows, with dashed lines, that the memory 1502 is optional for the electronic device 1600.

The processor 1501 and the memory 1502 may be coupled through an interface circuit, or may be integrated together. This is not limited herein.

A specific connection medium between the processor 1501, the memory 1502, and the communication interface 1503 is not limited in this embodiment of this application. In this embodiment of this application, the processor 1501, the memory 1502, and the communication interface 1503 are connected to each other through a bus 1504 in FIG. 15. The bus is represented by a bold line in FIG. 15. A manner of connection between other components is merely an example for description, and specific connection is not limited thereto. The bus may be classified into an address bus, a data bus, a control bus, and the like. For ease of representation, only one bold line is used to represent the bus in FIG. 15, but this does not mean that there is only one bus or only one type of bus.

It should be understood that the processor mentioned in embodiments of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct Rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be noted that the memory described in this specification aims to include but is not limited to these memories and any memory of another proper type.

An embodiment of this application further provides a computer-readable storage medium, including a program or instructions. When the program or the instructions are run on a computer, the tone mapping method in the embodiment shown in FIG. 4 or the image encoding method in the embodiment shown in FIG. 12 is performed.

Persons skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-readable storage media (including but not limited to a disk memory, a CD-ROM, and an optical memory) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that persons skilled in the art can make various modifications and variations to this application without departing from the spirit and scope of this application. In this case, if the modifications and variations made to this application fall within the scope of the claims of this application and equivalent technologies thereof, this application is intended to cover these modifications and variations.

**Claims**

1.  A tone mapping method, wherein the method comprises:

    obtaining a to-be-displayed image;
    obtaining reference information, wherein the reference information comprises at least one of a reference display device size, a reference viewing distance, a reference viewing angle, reference ambient light luminance, or reference display device resolution;
    obtaining terminal device information, wherein the terminal device information comprises at least one of a terminal display device size, a user viewing distance, a user viewing angle, ambient light luminance, or terminal display device resolution; and
    performing tone mapping on the to-be-displayed image based on the reference information and the terminal device information of a corresponding type.

2.  The method according to claim 1, wherein performing tone mapping on the to-be-displayed image based on the reference information and the terminal device information of the corresponding type comprises:

    obtaining a tone mapping parameter based on the reference information and the terminal device information of the corresponding type; and
    performing tone mapping on the to-be-displayed image based on the tone mapping parameter.

3.  The method according to claim 2, wherein obtaining the tone mapping parameter based on the reference information and the terminal device information of the corresponding type comprises:
    adjusting an initial tone mapping parameter of the to-be-displayed image based on the reference information and the terminal device information of the corresponding type, to obtain the tone mapping parameter.

4.  The method according to claim 3, wherein adjusting the initial tone mapping parameter of the to-be-displayed image based on the reference information and the terminal device information of the corresponding type, to obtain the tone mapping parameter comprises:

    when a relationship between the reference information and the terminal device information of the corresponding type meets a first condition, adjusting the initial tone mapping parameter of the to-be-displayed image in a first manner, to obtain the tone mapping parameter; or
    when a relationship between the reference information and the terminal device information of the corresponding type meets a second condition, adjusting the initial tone mapping parameter of the to-be-displayed image in a second manner, to obtain the tone mapping parameter, wherein

the initial tone mapping parameter represents an initial tone mapping curve, and the tone mapping parameter represents an adjusted tone mapping curve.

5. The method according to claim 4, wherein the first condition comprises:
at least one of the following: the terminal display screen size is smaller than the reference display device size, the user viewing distance is greater than the reference viewing distance, the user viewing angle deviates from the reference viewing angle, the ambient light luminance is greater than the reference ambient light luminance, or the terminal display device resolution is less than the reference display device resolution.

6. The method according to claim 4 or 5, wherein adjusting the initial tone mapping parameter of the to-be-displayed image in the first manner comprises:

obtaining one or more first luminance feature values of the to-be-displayed image; and
adjusting the initial tone mapping parameter, so that an obtained mapped value that is of the adjusted tone mapping curve and that is at the one or more first luminance feature values is greater than a mapped value that is of the initial tone mapping curve and that is at the one or more first luminance feature values.

7. The method according to any one of claims 4 to 6, wherein adjusting the initial tone mapping parameter of the to-be-displayed image in the first manner further comprises:

obtaining one or more second luminance feature values of the to-be-displayed image; and
adjusting the initial tone mapping parameter, so that an obtained slope that is of the adjusted tone mapping curve and that is at the one or more second luminance feature values is greater than a slope that is of the initial tone mapping curve and that is at the one or more second luminance feature values.

8. The method according to any one of claims 4 to 7, wherein adjusting the initial tone mapping parameter of the to-be-displayed image in the first manner further comprises:

obtaining a base layer and one or more enhancement layers of the to-be-displayed image, wherein a value obtained through mapping on a first feature value of any enhancement layer in the one or more enhancement layers based on the initial tone mapping curve of the any enhancement layer is a second feature value; and
adjusting the initial tone mapping parameter of the any enhancement layer, so that an absolute value of a value obtained through mapping on the first feature value based on the adjusted tone mapping curve is greater than an absolute value of the second feature value.

9. The method according to claim 4, wherein the second condition comprises:
at least one of the following: the terminal display screen size is larger than the reference display device size, the user viewing distance is less than the reference viewing distance, the ambient light luminance is less than the reference ambient light luminance, or the terminal display device resolution is greater than the reference display device resolution.

10. The method according to claim 4 or 9, wherein adjusting the initial tone mapping parameter of the to-be-displayed image in the second manner comprises:

obtaining one or more third luminance feature values of the to-be-displayed image; and
adjusting the initial tone mapping parameter, so that an obtained mapped value that is of the adjusted tone mapping curve and that is at the one or more third luminance feature values is less than a mapped value that is of the initial tone mapping curve and that is at the one or more third luminance feature values.

11. The method according to claim 4, 9, or 10, wherein the one or more third luminance feature values comprise: one or more luminance feature values of a dark portion of the to-be-displayed image.

12. The method according to any one of claims 4 or 9 to 11, wherein adjusting the initial tone mapping parameter of the to-be-displayed image in the second manner further comprises:

obtaining one or more fourth luminance feature values of the to-be-displayed image; and
adjusting the initial tone mapping parameter, so that an obtained slope that is of the adjusted tone mapping curve and that is at the one or more fourth luminance feature values is less than a slope that is of the initial tone mapping curve and that is at the one or more fourth luminance feature values.

13. The method according to any one of claims 4 or 9 to 12, wherein adjusting the initial tone mapping parameter of the to-be-displayed image in the second manner further comprises:

obtaining a base layer and one or more enhancement layers of the to-be-displayed image, wherein a value obtained through mapping on a third feature value of any enhancement layer in the one or more enhancement layers based on the initial tone mapping curve of the any enhancement layer is a fourth feature value; and adjusting the initial tone mapping parameter of the any enhancement layer, so that an absolute value of a value obtained through mapping on the third feature value based on the adjusted tone mapping curve is less than an absolute value of the fourth feature value.

14. The method according to claim 3, wherein the method further comprises:

obtaining a reference tone mapping parameter of the to-be-displayed image;
obtaining a terminal display device display capability in the terminal device information; and
adjusting the reference tone mapping parameter of the to-be-displayed image based on the reference tone mapping parameter and the terminal display device display capability, to obtain the initial tone mapping parameter.

15. The method according to any one of claims 1 to 14, wherein obtaining the reference information comprises:

obtaining the reference information from metadata of the to-be-displayed image;
obtaining an index of the reference information from the metadata, and selecting the reference information from a plurality of pieces of preset reference information based on the index; or
using preset reference information as the reference information.

16. The method according to any one of claims 1 to 15, wherein obtaining the terminal device information comprises:

obtaining the terminal device information through measurement;
selecting the terminal device information from a plurality of pieces of preset terminal information based on a preset index; or
using preset terminal device information as the terminal device information.

17. An image encoding method, wherein the method comprises:

writing a to-be-displayed image into a bitstream; and
writing reference information of the to-be-displayed image into the bitstream, wherein the reference information comprises at least one of a reference display device size, a reference viewing distance, a reference viewing angle, reference ambient light luminance, or reference display device resolution; and
the reference information is for tone mapping on the to-be-displayed image.

18. The method according to claim 17, wherein the method further comprises:
writing a reference tone mapping parameter of the to-be-displayed image into the bitstream, wherein the reference tone mapping parameter is for obtaining an initial tone mapping parameter, the reference information is used by a decoder to adjust the initial tone mapping parameter to obtain a tone mapping parameter, and the tone mapping parameter is for tone mapping on the to-be-displayed image.

19. The method according to claim 17 or 18, wherein writing the reference information of the to-be-displayed image into the bitstream comprises:

writing the reference information into the bitstream; or
writing an index of the reference information into the bitstream.

20. The method according to any one of claims 17 to 19, wherein the method further comprises:

writing one or more luminance feature values of the to-be-displayed image into the bitstream, wherein
the one or more luminance feature values are used by the decoder to adjust the initial tone mapping parameter to obtain the tone mapping parameter.

21. A tone mapping apparatus, wherein the apparatus comprises:

a receiving module, configured to: obtain a to-be-displayed image;
obtain reference information, wherein the reference information comprises at least one of a reference display device size, a reference viewing distance, a reference viewing angle, reference ambient light luminance, or reference display device resolution; and
obtain terminal device information, wherein the terminal device information comprises at least one of a terminal display device size, a user viewing distance, a user viewing angle, ambient light luminance, or terminal display device resolution; and
a tone mapping module, configured to perform tone mapping on the to-be-displayed image based on the reference information and the terminal device information of a corresponding type.

22. The apparatus according to claim 21, wherein performing tone mapping on the to-be-displayed image based on the reference information and the terminal device information of the corresponding type comprises:

obtaining a tone mapping parameter based on the reference information and the terminal device information of the corresponding type; and
performing tone mapping on the to-be-displayed image based on the tone mapping parameter.

23. The apparatus according to claim 22, wherein obtaining the tone mapping parameter based on the reference information and the terminal device information of the corresponding type comprises:
adjusting an initial tone mapping parameter of the to-be-displayed image based on the reference information and the terminal device information of the corresponding type, to obtain the tone mapping parameter.

24. The apparatus according to claim 23, wherein adjusting the initial tone mapping parameter of the to-be-displayed image based on the reference information and the terminal device information of the corresponding type, to obtain the tone mapping parameter comprises:

when a relationship between the reference information and the terminal device information of the corresponding type meets a first condition, adjusting the initial tone mapping parameter of the to-be-displayed image in a first manner, to obtain the tone mapping parameter; and
when a relationship between the reference information and the terminal device information of the corresponding type meets a second condition, adjusting the initial tone mapping parameter of the to-be-displayed image in a second manner, to obtain the tone mapping parameter, wherein
the initial tone mapping parameter represents an initial tone mapping curve, and the tone mapping parameter represents an adjusted tone mapping curve.

25. The apparatus according to claim 24, wherein the first condition comprises:
at least one of the following: the terminal display screen size is smaller than the reference display device size, the user viewing distance is greater than the reference viewing distance, the user viewing angle deviates from the reference viewing angle, the ambient light luminance is greater than the reference ambient light luminance, or the terminal display device resolution is less than the reference display device resolution.

26. The apparatus according to claim 24 or 25, wherein adjusting the initial tone mapping parameter of the to-be-displayed image in the first manner comprises:

obtaining one or more first luminance feature values of the to-be-displayed image; and
adjusting the initial tone mapping parameter, so that an obtained mapped value that is of the adjusted tone mapping curve and that is at the one or more first luminance feature values is greater than a mapped value that is of the initial tone mapping curve and that is at the one or more first luminance feature values.

27. The apparatus according to any one of claims 24 to 26, wherein adjusting the initial tone mapping parameter of the to-be-displayed image in the first manner further comprises:

obtaining one or more second luminance feature values of the to-be-displayed image; and
adjusting the initial tone mapping parameter, so that an obtained slope that is of the adjusted tone mapping curve and that is at the one or more second luminance feature values is greater than a slope that is of the initial tone mapping curve and that is at the one or more second luminance feature values.

28. The apparatus according to any one of claims 24 to 27, wherein adjusting the initial tone mapping parameter of the to-be-displayed image in the first manner further comprises:

obtaining a base layer and one or more enhancement layers of the to-be-displayed image, wherein a value obtained through mapping on a first feature value of any enhancement layer in the one or more enhancement layers based on the initial tone mapping curve of the any enhancement layer is a second feature value; and adjusting the initial tone mapping parameter of the any enhancement layer, so that an absolute value of a value obtained through mapping on the first feature value based on the adjusted tone mapping curve is greater than an absolute value of the second feature value.

29. The apparatus according to claim 24, wherein the second condition comprises:
at least one of the following: the terminal display screen size is larger than the reference display device size, the user viewing distance is less than the reference viewing distance, the ambient light luminance is less than the reference ambient light luminance, or the terminal display device resolution is greater than the reference display device resolution.

30. The apparatus according to claim 24 or 29, wherein adjusting the initial tone mapping parameter of the to-be-displayed image in the second manner comprises:

obtaining one or more third luminance feature values of the to-be-displayed image; and adjusting the initial tone mapping parameter, so that an obtained mapped value that is of the adjusted tone mapping curve and that is at the one or more third luminance feature values is less than a mapped value that is of the initial tone mapping curve and that is at the one or more third luminance feature values.

31. The apparatus according to claim 30, wherein the one or more third luminance feature values comprise: one or more luminance feature values of a dark portion of the to-be-displayed image.

32. The apparatus according to any one of claims 24 or 29 to 31, wherein adjusting the initial tone mapping parameter of the to-be-displayed image in the second manner further comprises:

obtaining one or more fourth luminance feature values of the to-be-displayed image; and adjusting the initial tone mapping parameter, so that an obtained slope that is of the adjusted tone mapping curve and that is at the one or more fourth luminance feature values is less than a slope that is of the initial tone mapping curve and that is at the one or more fourth luminance feature values.

33. The apparatus according to any one of claims 24 or 29 to 32, wherein adjusting the initial tone mapping parameter of the to-be-displayed image in the second manner further comprises:

obtaining a base layer and one or more enhancement layers of the to-be-displayed image, wherein a value obtained through mapping on a third feature value of any enhancement layer in the one or more enhancement layers based on the initial tone mapping curve of the any enhancement layer is a fourth feature value; and adjusting the initial tone mapping parameter of the any enhancement layer, so that an absolute value of a value obtained through mapping on the third feature value based on the adjusted tone mapping curve is less than an absolute value of the fourth feature value.

34. The apparatus according to claim 23, wherein the tone mapping module is further configured to:

obtain a reference tone mapping parameter of the to-be-displayed image;
obtain a terminal display device display capability in the terminal device information; and
adjust the reference tone mapping parameter of the to-be-displayed image based on the reference tone mapping parameter and the terminal display device display capability, to obtain the initial tone mapping parameter.

35. The apparatus according to any one of claims 21 to 34, wherein obtaining the reference information comprises:

obtaining the reference information from metadata of the to-be-displayed image;

obtaining an index of the reference information from the metadata, and selecting the reference information from a plurality of pieces of preset reference information based on the index; or

using preset reference information as the reference information.

36. The apparatus according to any one of claims 21 to 35, wherein obtaining the terminal device information comprises:

obtaining the terminal device information through measurement;

selecting the terminal device information from a plurality of pieces of preset terminal information based on a preset index; or

using preset terminal device information as the terminal device information.

37. An image encoding apparatus, wherein the apparatus comprises:

an encoding module, configured to: write a to-be-displayed image into a bitstream; and

write reference information of the to-be-displayed image into the bitstream, wherein the reference information comprises at least one of a reference display device size, a reference viewing distance, a reference viewing angle, reference ambient light luminance, or reference display device resolution; and

the reference information is for tone mapping on the to-be-displayed image; and

a sending module, configured to send the bitstream.

38. The apparatus according to claim 37, wherein the encoding module is further configured to:
write a reference tone mapping parameter of the to-be-displayed image into the bitstream, wherein the reference tone mapping parameter is for obtaining the tone mapping parameter, the reference information is used by a decoder to adjust the initial tone mapping parameter to obtain a tone mapping parameter, and the tone mapping parameter is for tone mapping on the to-be-displayed image.

39. The apparatus according to claim 37 or 38, wherein writing the reference information of the to-be-displayed image into the bitstream comprises:

writing the reference information into the bitstream; or

writing an index of the reference information into the bitstream.

40. The apparatus according to any one of claims 37 to 39, wherein the encoding module is further configured to:
write one or more luminance feature values of the to-be-displayed image into the bitstream, wherein the one or more luminance feature values are used by the decoder to adjust the initial tone mapping parameter to obtain the tone mapping parameter.

41. An electronic device, comprising a memory and a processor that are coupled to each other, wherein the processor invokes program code stored in the memory to perform the method according to any one of claims 1 to 16 or claims 17 to 20.

42. A computer-readable storage medium, wherein the computer-readable storage medium stores a computer program, and when the computer program is run on a computer or a processor, the method according to any one of claims 1 to 16 or claims 17 to 20 is implemented.

43. A computer program product, comprising a program or instructions, wherein when the program or the instructions are run on a computer or a processor, the computer or the processor is enabled to perform the method according to any one of claims 1 to 16 or claims 17 to 20.

EP 4 648 404 A1

FIG. 1

2106

Terminal device

Smartphone/Tablet
computer 2108

Computer/Laptop computer
2110

Network video recorder/
Digital video recorder 2112

TV 2114

Set-top box 2116

Video conference system
2118

Video surveillance system
2120

Personal digital assistant
2122

Vehicle-mounted device
2124

...

2102

Capture device

2104

2126

Display

FIG. 2A

FIG. 2B

EP 4 648 404 A1

```
┌──────────┐      ┌──────────────┐      ┌──────────────┐      ┌──────────────┐      ┌──────────────┐
│  Video   │─────▶│ Video stream │─────▶│ Video stream │─────▶│    Video     │─────▶│   Content    │
│ encoding │      │ transmission │      │ transcoding  │      │  streaming   │      │   delivery   │
│          │      │              │      │              │      │ media packet │      │   network    │
└──────────┘      └──────────────┘      └──────────────┘      └──────────────┘      └──────────────┘
     ▲                    │                     │                     ▲                    │
     │                    │                     ▼                     │                    ▼
┌──────────┐              │             ┌──────────────┐              │            ┌──────────────┐
│ Content  │              └────────────▶│ Video stream │──────────────┘            │ A plurality  │
│ creation │                            │   storage    │                           │   of OTT     │
│          │                            │              │                           │   devices    │
└──────────┘                            └──────────────┘                           └──────────────┘
```

FIG. 3A

FIG. 3B

FIG. 4A

```
                    HDR                                      HDR
                   video                                    video
HDR          ┌──────────┐          ┌──────────┐      ┌──────────┐          ┌─────────────────────────────┐
video        │          │ ────────▶│          │Bitstream          │          │       Tone mapping          │
──────▶│   HDR    │          │   HDR    │─────▶│   HDR    │─────▶│                             │
             │  pre-    │          │  video   │          │  video   │          │  ┌────────┐   ┌────────┐   │
             │processing│          │ encoding │          │ decoding │          │  │  HDR   │──▶│  HDR   │   │
             │          │          │          │          │          │          │  │adaptation│ │ display│   │
             │          │ ────────▶│          │          │          │          │  └────────┘   └────────┘   │
             │          │   HDR    │          │          │          │   HDR    │                             │
             │          │ metadata │          │          │          │ metadata │  ┌────────┐   ┌────────┐   │
             └──────────┘          └──────────┘          └──────────┘─────────▶│  │  SDR   │──▶│  SDR   │   │
                                                                                  │adaptation│ │ display│   │
                                                                                  └────────┘   └────────┘   │
                                                                               └─────────────────────────────┘
```

FIG. 4B

```
┌─────────────────────────────────────────────────────────────────┐
│              Obtain a to-be-displayed image                       │  S501
└─────────────────────────────────────────────────────────────────┘
                              ↓
┌─────────────────────────────────────────────────────────────────┐
│  Obtain reference information, where the reference information     │
│  includes at least one of a reference display device size, a      │
│  reference viewing distance, a reference viewing angle, reference  │  S502
│  ambient light luminance, or reference display device resolution  │
└─────────────────────────────────────────────────────────────────┘
                              ↓
┌─────────────────────────────────────────────────────────────────┐
│  Obtain terminal device information, where the terminal device     │
│  information includes at least one of a terminal display device    │
│  size, a user viewing distance, a user viewing angle, ambient      │  S503
│  light luminance, or terminal display device resolution           │
└─────────────────────────────────────────────────────────────────┘
                              ↓
┌─────────────────────────────────────────────────────────────────┐
│  Perform tone mapping on the to-be-displayed image based on the    │  S504
│  reference information and the corresponding terminal device       │
│  information                                                       │
└─────────────────────────────────────────────────────────────────┘
```

FIG. 5

Initial tone mapping curve adjustment

FIG. 6

FIG. 7

FIG. 8

FIG. 9

## Initial tone mapping curve adjustment

FIG. 10

| Write a to-be-displayed image into a bitstream | S1101 |

| Write reference information of the to-be-displayed image into the bitstream, where the reference information includes at least one of a reference display device size, a reference viewing distance, a reference viewing angle, reference ambient light luminance, or reference display device resolution | S1102 |

FIG. 11

Tone mapping apparatus 1200

| Receiving module 1201 | Tone mapping module 1202 |

FIG. 12

Image encoding apparatus 1300

| Encoding module 1301 | Sending module 1302 |

FIG. 13

1400

Processor 1401

Communication interface 1403

Memory 1402

FIG. 14

1500

Processor 1501

Communication interface 1503

Memory 1502

FIG. 15

## INTERNATIONAL SEARCH REPORT

| International application No. |
| --- |
| **PCT/CN2024/077956** |

| A. | CLASSIFICATION OF SUBJECT MATTER |
| --- | --- |

H04N 9/64(2023.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, CNKI, VEN, WPABS, ENTXT: 色调映射, 显示设备, 终端设备, 尺寸, 长, 宽, 距离, 角度, 环境, 光, 分辨率, 参考, 调整, 亮度, 增强层, 边缘, 纹理, tone mapping, display equipment, terminal equipment, size, length, width, distance, angle, environment, light, resolution, reference, adjust, luminance, enhancement layer, edge, texture

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107690811 A (APPLE INC.) 13 February 2018 (2018-02-13) description, paragraphs [0029], [0039], [0041], [0051], [0071]-[0072], [0235], and [0238] | 1-3, 14-23, 34-43 |
| Y | CN 107690811 A (APPLE INC.) 13 February 2018 (2018-02-13) description, paragraphs [0029], [0039], [0041], [0051], [0071]-[0072], [0235], and [0238] | 4-13, 24-33 |
| Y | WO 2022108201 A1 (SAMSUNG ELECTRONICS CO., LTD.) 27 May 2022 (2022-05-27) description, paragraphs [0174]-[0175], [0182], [0189], and [0198] | 4-7, 9-12, 24-27, 29-32 |
| Y | CN 106796775 A (SAMSUNG ELECTRONICS CO., LTD.) 31 May 2017 (2017-05-31) description, paragraphs [0267]-[0268], [0271], and [0282] | 8, 13, 28, 33 |
| A | US 2016005153 A1 (DOLBY LAB LICENSING CORP.) 07 January 2016 (2016-01-07) entire document | 1-43 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 May 2024** | **21 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/077956**

| Patent document cited in search report | | | Publication date (day/month/year) | Patent family member(s) | | | Publication date (day/month/year) |
|---|---|---|---|---|---|---|---|
| CN | 107690811 | A | 13 February 2018 | WO | 2016197033 | A1 | 08 December 2016 |
| | | | | US | 2016358584 | A1 | 08 December 2016 |
| | | | | US | 10089960 | B2 | 02 October 2018 |
| | | | | JP | 2018524863 | A | 30 August 2018 |
| | | | | JP | 6574270 | B2 | 11 September 2019 |
| | | | | EP | 3304881 | A1 | 11 April 2018 |
| | | | | EP | 3304881 | B1 | 10 August 2022 |
| | | | | US | 2016358346 | A1 | 08 December 2016 |
| | | | | US | 10249263 | B2 | 02 April 2019 |
| | | | | KR | 20170141236 | A | 22 December 2017 |
| | | | | KR | 102059256 | B1 | 24 December 2019 |
| | | | | AU | 2016270443 | A1 | 30 November 2017 |
| | | | | AU | 2016270443 | B2 | 03 January 2019 |
| WO | 2022108201 | A1 | 27 May 2022 | None | | | |
| CN | 106796775 | A | 31 May 2017 | KR | 20160040981 | A | 15 April 2016 |
| | | | | KR | 102308507 | B1 | 06 October 2021 |
| US | 2016005153 | A1 | 07 January 2016 | US | 9613407 | B2 | 04 April 2017 |

Form PCT/ISA/210 (patent family annex) (July 2022)